# FASCICULE DE BREVET EUROPEEN

(11) **EP 4 153 434 B1**
(45) Date de publication et mention de la délivrance du brevet: **13.03.2024**
(21) Numéro de dépôt: 21726883.8
(22) Date de dépôt: 17.05.2021
(51) Int. Cl.: B60B 11/06, B60B 19/00, B60B 11/08

(54) **DISPOSITIF DE ROULEMENT ET VÉHICULE MUNI DE CELUI-CI**
ROLLVORRICHTUNG UND FAHRZEUG DAMIT
ROLLING DEVICE AND VEHICLE PROVIDED WITH SAME

(30) Priorité: 18.05.2020 FR 2004952
(43) Date de publication de la demande: 29.03.2023
(73) Titulaire: Electricité de France, 75008 Paris (FR); École Nationale Supérieure de Techniques Avancées Bretagne, 29200 Brest (FR)
(72) Inventeur: ARGOUARC'H, Yannick, 29460 LOGONNA-DAOULAS (FR); TREBAOL, Hervé, 29290 SAINT RENAN (FR)
(74) Mandataire: Regimbeau
(86) Numéro de dépôt international: PCT/EP2021/062931
(87) Numéro de publication internationale: WO 2021/233804

(56) Documents cités:
- WO-A1-2007/104082
- FR-A- 771 427
- GB-A- 507 313
- US-A- 1 887 544

## Description

L'invention concerne un dispositif de roulement, ainsi qu'un véhicule comportant ce dispositif de roulement.

Le domaine de l'invention concerne les roues devant rouler sur ou contre un support extérieur de roulage, pouvant être le sol ou autre, pour tout type de véhicule.

L'invention se situe dans le domaine du transport terrestre. Elle peut être classée dans la catégorie des roues : système mécanique rotatif, de forme circulaire, qui permet de déplacer des charges en minimisant les pertes énergétiques. Les applications de l'invention concernent les transporteurs terrestres pour lesquels l'objectif est d'obtenir la surface de contact avec le support de roulage, la plus grande. De nombreux transporteurs sont concernés, comme les transporteurs de charges lourdes (travaux publics, industrie minière, agriculture, industrie forestière...), les transporteurs tous terrains, mais aussi les transporteurs à adhérence magnétique. On entend par adhérence magnétique la capacité du transporteur à adhérer au support de roulage par l'utilisation d'un champ magnétique contrôlé.

L'invention cherche à obtenir une roue qui se déforme et s'adapte à la géométrie du support extérieur de roulage qu'elle rencontre, afin de maximiser la surface de contact, notamment pour un support extérieur de roulage courbe.

Dans le cas des véhicules terrestres classiques à pneus, les roues sont circulaires et le support extérieur de roulage étant une surface courbe, les contacts roue / support extérieur de roulage sont donc caractérisés par des contacts de surfaces relativement faibles. Cette caractéristique induit une pression de contact importante pénalisante pour la tenue mécanique des roues, mais aussi pour la tenue mécanique du support extérieur de roulage. Les conséquences peuvent être diverses : limitation de la durée de vie des pneumatiques de roue, voire éclatement de ceux-ci en cas de surcharge, limitation de la capacité propulsive d'une roue par arrachement local du support extérieur de roulage (patinage), écrasement de sols qui doivent être préservés dans le cas d'engins agricoles ou forestiers.

Dans le cas des transporteurs magnétiques à roues magnétiques, les conséquences d'une faible surface de contact provoquent, en plus des conséquences précédentes, une perte d'adhérence magnétique. Les roues ferromagnétiques sont associées avec un générateur de champ magnétique, permanent ou non. Ces roues sont en contact avec un support extérieur de roulage ferromagnétique. Les roues et le support extérieur de roulage étant constitués de matériaux peu déformables (par exemple. : acier doux), les surfaces de contact associées sont très réduites. Le champ magnétique boucle au travers du générateur de champ et des roues, du support extérieur de roulage. Cette boucle magnétique génère la force d'attraction entre le transporteur magnétique et le support extérieur de roulage.

Dans le cas des roues magnétiques, pour assurer une force d'attraction suffisamment grande, il est nécessaire d'assurer une bonne circulation du champ magnétique à travers les différents composants. Les matériaux ferromagnétiques saturant au-delà d'une certaine densité de flux magnétique, il est donc indispensable que les sections de circulation du champ magnétique, sur l'ensemble de la boucle, soient suffisantes. Dans le cas des roues magnétiques circulant sur des supports de roulage courbes (pouvant présenter des ondulations irrégulières), les surfaces de contacts étant très faibles, le champ magnétique circule donc difficilement. En conséquence, la force d'attraction est fortement limitée.

Le document FR-A-771 427 décrit un dispositif pour roues jumelées des poids lourds, ayant un disque central, portant dans des demi-cuvettes sphériques des axes balanciers, sur lesquels se trouvent des viroles porte-jante articulées dans des cuvettes sphériques.

Le document US1887544 décrit une roue de véhicule terrestre, la roue ayant deux jantes portant deux pneus verticaux de roulement. Les deux jantes latérales sont articulées chacune en rotation par une rotule rotative présente aux extrémités d'une tige. La tige comporte en son milieu une rotule centrale rotative articulée en rotation sur un support central, lequel est prévu entre les deux jantes latérales et est solidaire du moyeu central horizontal.

La difficulté engendrée par la roue à pneus connue par le document US1887544, est que des pierres ou des objets peuvent se coincer entre les jantes lorsque les pneus roulent sur le sol, ce qui peut les déchirer. Afin de surmonter cette difficulté, on recherche un jeu faible entre les pneus. Toutefois, dans le cas de la roue à pneus connue par le document US1887544, l'inconvénient est qu'une diminution du jeu initial entre les deux jantes latérales supportant les pneus induit deux conséquences antagonistes : la diminution du jeu conduit à empêcher l'insertion d'objets entre les pneus mais en en même temps limite les capacités à s'adapter à un support extérieur de roulage (sol) courbe.

Le document EP2004446 décrit une roue magnétique à éléments ferromagnétiques rotatifs, montés sur un moyeu contenant un aimant permanent commutable afin que les éléments ferromagnétiques puissent rouler sur un support extérieur de roulage formé par une paroi en acier ferromagnétique, pour générer un flux magnétique passant par les éléments ferromagnétiques rotatifs, le moyeu et la paroi en acier ferromagnétique, afin de plaquer la circonférence des éléments ferromagnétiques rotatifs sur cette paroi. Dans le cas de la roue magnétique connue par le document EP2004446, le jeu entre les éléments ferromagnétiques rotatifs doit être le plus petit possible, afin de conduire au mieux le flux magnétique devant passer par ceux-ci vers la surface extérieure de roulage. La roue magnétique connue par le document EP2004446 a notamment pour inconvénients une surface de contact trop faible dans le cas où elle rencontre une surface extérieure de roulage courbe et la présence de jeux entre les éléments ferromagnétiques. Ces deux inconvénients limitent la capacité d'attraction magnétique.

Le problème à résoudre par l'invention est d'obtenir un dispositif de roulement, pouvant être du type roue terrestre classique ou roue magnétique, qui permette de pallier les inconvénients mentionnés ci-dessus et qui résolve le problème de devoir diminuer le jeu entre les éléments portant les surfaces périphériques de roulement, devant rouler sur le support extérieur de roulage et de maximiser les surfaces de contact avec un support extérieur de roulage courbe.

A cet effet, un premier objet de l'invention est un dispositif de roulement, comportant :
un moyeu rotatif, apte à tourner autour d'une première direction de rotation,
des éléments annulaires, disposés autour du moyeu rotatif et portant chacun une surface périphérique de roulement,
des tiges s'étendant suivant une deuxième direction longitudinale,
un support radial, solidaire du moyeu et disposé autour du moyeu,
les tiges traversant des premiers évidements du support radial et étant inclinables par rapport au support radial,
caractérisé en ce que
chaque élément annulaire a des deuxièmes évidements, au travers desquels les tiges sont aptes à coulisser en translation suivant la deuxième direction longitudinale lorsque les tiges sont inclinées,
les éléments annulaires ayant chacun des guidages en translation dans des plans perpendiculaires à la première direction.

Grâce à l'invention, le problème indiqué ci-dessus est résolu dans le cas d'une roue du type roue terrestre classique et/ou dans le cas d'une roue magnétique.

En effet, dans le cas de la roue du type roue terrestre classique connue par le document US1887544, le jeu (distance horizontale) entre les deux jantes latérales de support des pneus varie lors de l'inclinaison de la tige et n'est pas maîtrisé, car ce jeu dépend de la courbure du support extérieur de roulage, sur lequel roulent les pneus. Ainsi, lorsque la tige s'incline, une diminution du jeu initial entre les éléments (jantes latérales) supportant les pneus induit deux conséquences antagonistes : la diminution du jeu conduit à empêcher l'insertion d'objets entre les pneus mais en en même temps limite les capacités à s'adapter au support de roulage courbe. Cette difficulté est vaincue par le dispositif de roulement suivant l'invention, dans lequel du fait des caractéristiques mentionnées ci-dessus l'inclinaison de la tige n'a pas d'influence sur le jeu (distance suivant la direction de rotation du moyeu rotatif) entre les éléments annulaires et ce jeu est ainsi maîtrisé pour rester égal à une valeur faible, prescrite et constante. Ainsi, le déplacement rotatif des deux jantes latérales de la roue classique connue par le document US1887544 n'est pas équivalent au déplacement vertical en translation des éléments annulaires du dispositif de roulement suivant l'invention.

Dans le cas de la roue magnétique, le jeu (distance suivant la direction de rotation du moyeu rotatif) entre les éléments annulaires est maîtrisé pour rester égal à une valeur faible, prescrite et constante, afin de conduire au mieux le flux magnétique devant passer par ces éléments annulaires vers la surface extérieure de roulage. Dans le cas de la roue du type roue terrestre classique connue par le document US1887544, plus l'angle d'inclinaison de la tige est grand, plus les éléments portant les pneus se rapprochent. Par conséquent, si ces jantes latérales étaient montées avec un jeu initial nul dans la position horizontale de la tige, l'inclinaison de la tige serait impossible : il y aurait un blocage. Par conséquent, si la roue du type roue terrestre classique connue par le document US1887544 était transposée à une roue magnétique, une diminution du jeu initial entre les éléments induirait donc deux conséquences antagonistes : l'augmentation de la capacité à transmettre le flux magnétique et une impossibilité à s'adapter au support extérieur de roulage courbe. Cette difficulté est vaincue par le dispositif de roulement suivant l'invention, dans lequel du fait des caractéristiques mentionnées ci-dessus l'inclinaison de la tige n'a pas d'influence sur le jeu (distance suivant la direction de rotation du moyeu rotatif) entre les éléments annulaires et ce jeu est ainsi maîtrisé pour rester égal à une valeur faible, prescrite et constante. Ainsi, le déplacement rotatif des deux jantes latérales de la roue classique connue par le document US1887544 n'est pas équivalent au déplacement vertical en translation des éléments annulaires du dispositif de roulement suivant l'invention dans le cas d'une roue magnétique.

Suivant un mode de réalisation de l'invention, les éléments annulaires ont des guidages en translation dans des plans perpendiculaires à la première direction par contact plan contre plan l'un contre l'autre et/ou par rapport à des flasques fixés au moyeu et/ou par rapport au support radial.

Suivant un mode de réalisation de l'invention, les éléments annulaires sont délimités par des surfaces latérales planes, qui sont situées dans les plans perpendiculaires à la première direction et qui sont guidées au moins pour certaines de ces surfaces latérales planes l'une contre l'autre en translation dans lesdits plans,
au moins un premier des éléments annulaires étant guidé en translation dans un plan perpendiculaire à la première direction contre une surface plane d'un flasque d'extrémité, située dans un plan perpendiculaire à la première direction,
au moins un deuxième des éléments annulaires étant guidé en translation dans un plan perpendiculaire à la première direction contre une surface plane du support radial, située dans un plan perpendiculaire à la première direction.

Suivant un mode de réalisation de l'invention, les éléments annulaires sont en matériau ferromagnétique, le dispositif de roulement comporte en outre un axe mécanique, qui s'étend suivant la première direction de rotation et autour duquel le moyeu est monté rotatif, l'axe mécanique comportant un générateur, apte à générer un champ magnétique au travers de la surface périphérique de roulement des éléments annulaires pour former par les éléments annulaires une roue magnétique.

Suivant un mode de réalisation de l'invention, le générateur comporte un premier aimant permanent ayant un premier pôle nord et un premier pôle sud, et un deuxième aimant permanent situé au-dessus du premier aimant permanent et ayant un deuxième pôle nord et un deuxième pôle sud, les premier et deuxième aimants permanents étant mobiles l'un par rapport à l'autre autour d'un axe de rotation vertical pour pouvoir prendre au moins une première position d'augmentation d'attraction magnétique des surfaces périphériques de roulement, dans laquelle le deuxième pôle nord est au-dessus du premier pôle nord, le deuxième pôle sud est au-dessus du premier pôle sud et les pôles nord ou les pôles sud sont orientés vers la première direction de rotation, et une deuxième position de suppression d'attraction magnétique des surfaces périphériques de roulement, dans laquelle le deuxième pôle nord est au-dessus du premier pôle sud et le deuxième pôle sud est au-dessus du premier pôle nord, le générateur comportant un dispositif de commande pour provoquer la rotation des premier et deuxième aimants permanents l'un par rapport à l'autre autour de l'axe de rotation vertical jusque dans la première position ou jusque dans la deuxième position.

Suivant un mode de réalisation de l'invention, le dispositif de commande est apte à provoquer la rotation des premier et deuxième aimants permanents l'un par rapport à l'autre autour de l'axe de rotation vertical jusque dans la première position ou jusque dans la deuxième position ou jusque dans au moins une troisième position intermédiaire entre la première position et la deuxième position.

Suivant un mode de réalisation de l'invention, au moins une des surfaces latérales planes d'au moins un des éléments annulaires comporte à proximité de la surface périphérique de roulement de cet élément annulaire au moins une rainure débouchante le long de la surface périphérique de roulement.

Suivant un mode de réalisation de l'invention, chaque élément annulaire est guidé en translation dans un plan perpendiculaire à la première direction entre une surface plane d'un premier flasque prévu pour cet élément annulaire et une surface plane d'un deuxième flasque prévu pour cet élément annulaire et contre ces surfaces planes, qui sont perpendiculaires à la première direction, les premiers flasques étant distants les uns des autres le long de la première direction, étant à distance du support radial et étant fixés au moyeu rotatif, les deuxièmes flasques étant distants les uns des autres le long de la première direction, étant à distance du support radial et étant fixés au moyeu rotatif.

Suivant un mode de réalisation de l'invention, une deuxième bille est retenue rotative dans chaque deuxième évidement de chaque élément annulaire, chaque tige traversant un deuxième trou traversant de la deuxième bille et étant apte à coulisser en translation dans la deuxième bille suivant la deuxième direction longitudinale lorsque les tiges sont inclinées.

Suivant un mode de réalisation de l'invention, la surface périphérique de roulement est formée par un pneu.

Suivant un mode de réalisation de l'invention, la surface périphérique de roulement est formée par la surface périphérique extérieure de chaque élément annulaire.

Suivant un mode de réalisation de l'invention, le dispositif de roulement comporte des rotules intermédiaires, chaque rotule intermédiaire étant logée dans chaque premier évidement du support radial et reliant chaque tige d'une manière rotative au support radial.

Suivant un mode de réalisation de l'invention, chaque rotule intermédiaire comporte une première bille retenue rotative dans chaque premier évidement du support radial, chaque tige traversant un premier trou traversant de la première bille et étant apte à coulisser en translation dans la première bille suivant la deuxième direction longitudinale lorsque les tiges sont inclinées.

Suivant un mode de réalisation de l'invention, dans chaque premier évidement du support radial est fixée une bague comportant une surface intérieure de glissement en forme de portion de sphère, dans laquelle la première bille est retenue rotative et/ou dans chaque deuxième évidement de chaque élément annulaire est fixée une bague comportant une surface intérieure de glissement en forme de portion de sphère, dans laquelle la deuxième bille est retenue rotative.

Suivant un mode de réalisation de l'invention, les tiges sont rigides.

Suivant un mode de réalisation de l'invention, les tiges sont souples.

Un deuxième objet de l'invention est un véhicule roulant, comportant un châssis et des roues inférieures de sustentation du châssis, les roues étant montées rotatives par rapport au châssis, caractérisé en ce qu'au moins l'une déterminée des roues est formée par au moins un dispositif de roulement suivant l'une quelconque des revendications précédentes, la roue déterminée étant montée rotative autour de la première direction de rotation et étant apte à rouler sur la surface de roulement.

L'invention sera mieux comprise à la lecture de la description qui va suivre, donnée uniquement à titre d'exemple non limitatif en référence aux figures ci-dessous des dessins annexés.
La figure 1 représente une vue schématique en coupe verticale d'un dispositif de roulement suivant un mode de réalisation de l'invention.
La figure 2 représente une vue schématique en perspective d'un dispositif de roulement suivant un mode de réalisation de l'invention.
La figure 3 représente une vue schématique de côté d'un élément annulaire d'un dispositif de roulement suivant un mode de réalisation de l'invention.
La figure 4 représente une vue schématique en perspective d'une partie d'un dispositif de roulement suivant un mode de réalisation de l'invention.
La figure 5 représente une vue schématique en perspective d'une partie d'un dispositif de roulement suivant un mode de réalisation de l'invention.
La figure 6 représente une vue schématique en perspective d'une partie d'un dispositif de roulement suivant un mode de réalisation de l'invention.
La figure 7 représente une vue schématique de côté d'un élément annulaire d'un dispositif de roulement suivant un mode de réalisation de l'invention.
La figure 8 représente une vue schématique de côté d'un élément annulaire d'un dispositif de roulement suivant un mode de réalisation de l'invention.
La figure 9 représente une vue schématique en coupe verticale d'éléments annulaires et d'axes d'un dispositif de roulement suivant un mode de réalisation de l'invention.
La figure 10 représente une vue schématique en coupe verticale d'éléments annulaires et d'axes d'un dispositif de roulement suivant un mode de réalisation de l'invention.
La figure 11 représente une vue schématique en coupe verticale d'un dispositif de roulement suivant un mode de réalisation de l'invention.
La figure 12 représente une vue schématique en coupe verticale d'un dispositif de roulement suivant un mode de réalisation de l'invention.
La figure 13 représente une vue schématique en coupe verticale d'un dispositif de roulement suivant un mode de réalisation de l'invention.
La figure 14 représente une vue schématique en coupe verticale d'un dispositif de roulement suivant un mode de réalisation de l'invention.
La figure 15 représente une vue schématique en perspective semi-éclatée d'un dispositif de roulement suivant un mode de réalisation de l'invention.
La figure 16 représente une vue schématique en perspective semi-éclatée et en coupe verticale d'un dispositif de roulement suivant un mode de réalisation de l'invention.
La figure 17 représente une vue schématique en perspective éclatée d'un dispositif de roulement suivant un mode de réalisation de l'invention.
La figure 18 représente une vue schématique en perspective éclatée et en coupe verticale d'un dispositif de roulement suivant un mode de réalisation de l'invention.
La figure 19 représente une vue schématique en perspective d'un véhicule comportant un dispositif de roulement suivant un mode de réalisation de l'invention.
La figure 20 représente une vue schématique en perspective d'un véhicule comportant un dispositif de roulement suivant un mode de réalisation de l'invention.

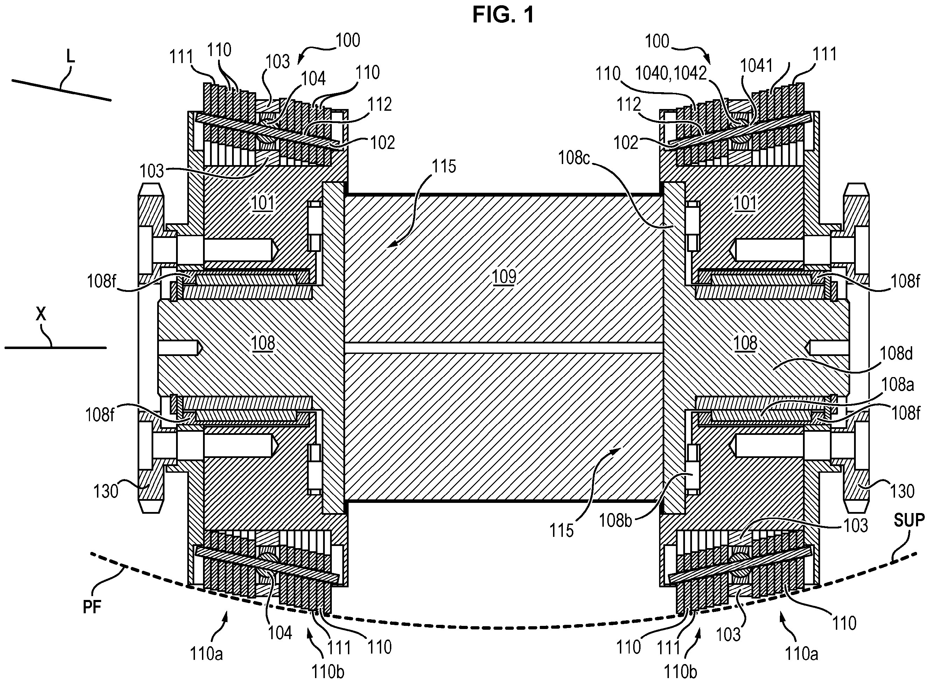

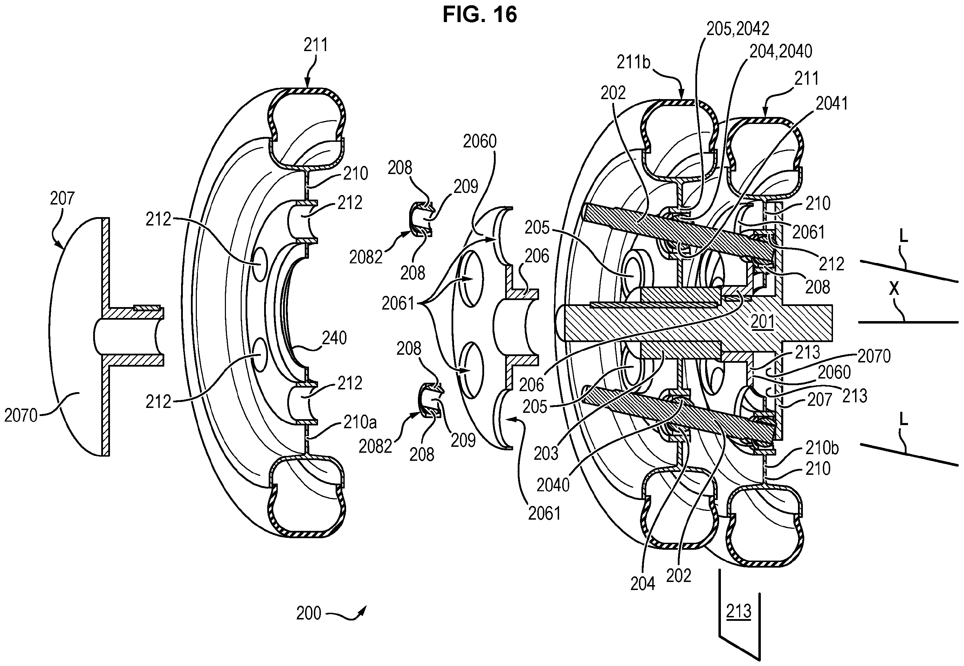

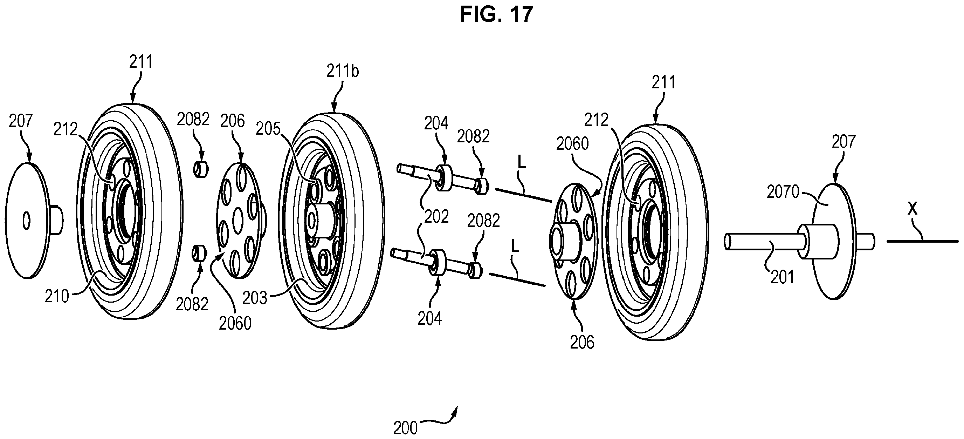

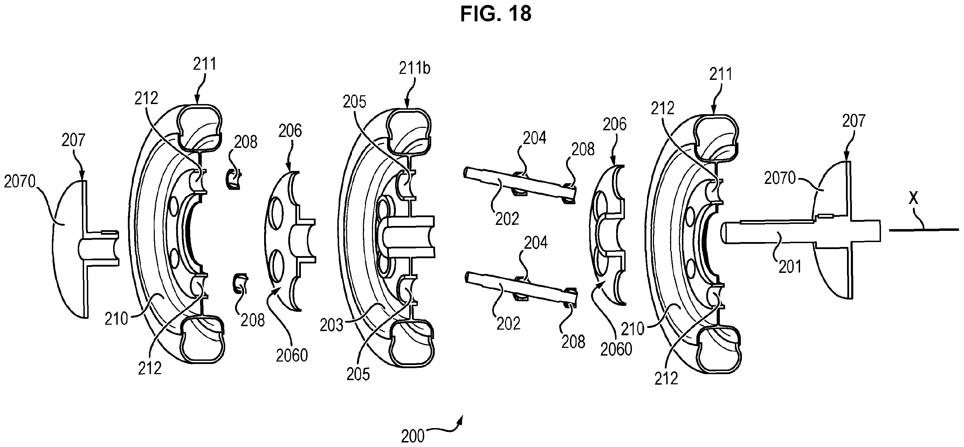

On décrit ci-dessous plus en détail en référence aux figures 1 à 20 des modes de réalisation d'un dispositif 100, 200 de roulement suivant l'invention.

Les figures 1 à 10, 19 et 20 décrivent une première famille de modes de réalisation d'un dispositif 100 de roulement dit de type à roue magnétique, où le dispositif 100 de roulement comporte des surfaces périphériques 111 de roulement, devant rouler contre un support extérieur SUP de roulage, lequel formé par une paroi ferromagnétique PF. Le terme ferromagnétique utilisé ci-après caractérise tous les matériaux qui possèdent la propriété de conduire un champ magnétique.

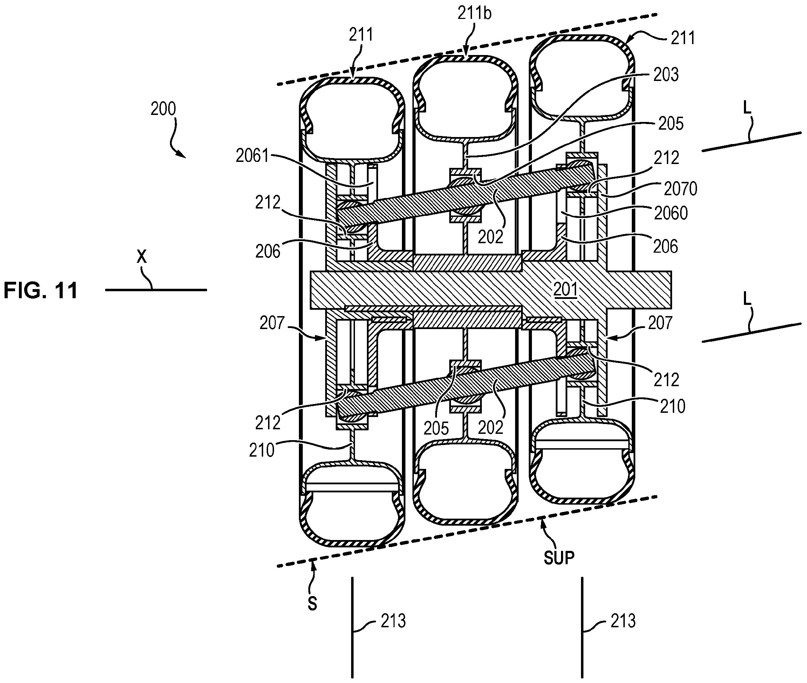

Les figures 11 à 19 décrivent une deuxième famille de modes de réalisation d'un dispositif 200 de roulement dit de type roue terrestre, où le dispositif 200 de roulement comporte des surfaces périphériques 211 de roulement, devant rouler sur un support extérieur SUP de roulage, formé par le sol S.

Le dispositif 100, 200 de roulement comporte un moyeu rotatif 101, 201, apte à tourner autour d'une première direction X de rotation traversant ce moyeu 101, 201. Par exemple, cette première direction X de rotation peut être horizontale. Des éléments annulaires 110, 210 sont disposés autour du moyeu rotatif 101, 201 et donc autour de la première direction X de rotation. Les éléments annulaires 110, 210 sont disposés les uns à côté des autres le long de la première direction X de rotation. Chaque élément annulaire 110, 210 porte la surface périphérique 111, 211 de roulement. Dans la première famille de modes de réalisation du dispositif 100 de roulement dit de type à roue magnétique, la surface périphérique 111 de roulement peut être formée par la surface périphérique extérieure de chaque élément annulaire 110. Dans la deuxième famille de modes de réalisation d'un dispositif 200 de roulement dit de type roue terrestre, la surface périphérique 211 de roulement peut être formée par un pneu.

Ci-dessous, la description est donnée d'abord pour les première et deuxième familles de modes de réalisation, les parties commençant par le chiffre 1 se référant à la première famille de modes de réalisation d'un dispositif 100 de roulement dit de type à roue magnétique, les parties commençant par le chiffre 2 se référant à la deuxième famille de modes de réalisation d'un dispositif 200 de roulement dit de type roue terrestre.

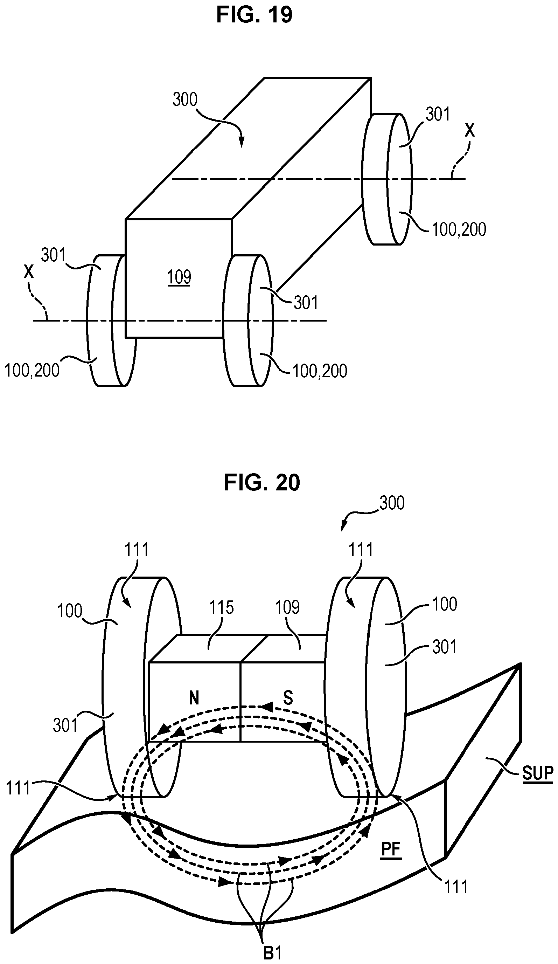

Ainsi que représenté à la figure 19, un ou plusieurs dispositifs 100, 200 de roulement peut être prévu sur le châssis 109 d'un véhicule 300. Chaque dispositifs 100, 200 de roulement peut former une roue 301 inférieure de sustentation du châssis 109. Les roues 301 sont montées rotatives par rapport au châssis 109 autour de la première direction X de rotation et étant apte à rouler par sa surface 111, 211 de roulement sur le support SUP extérieur de roulage.

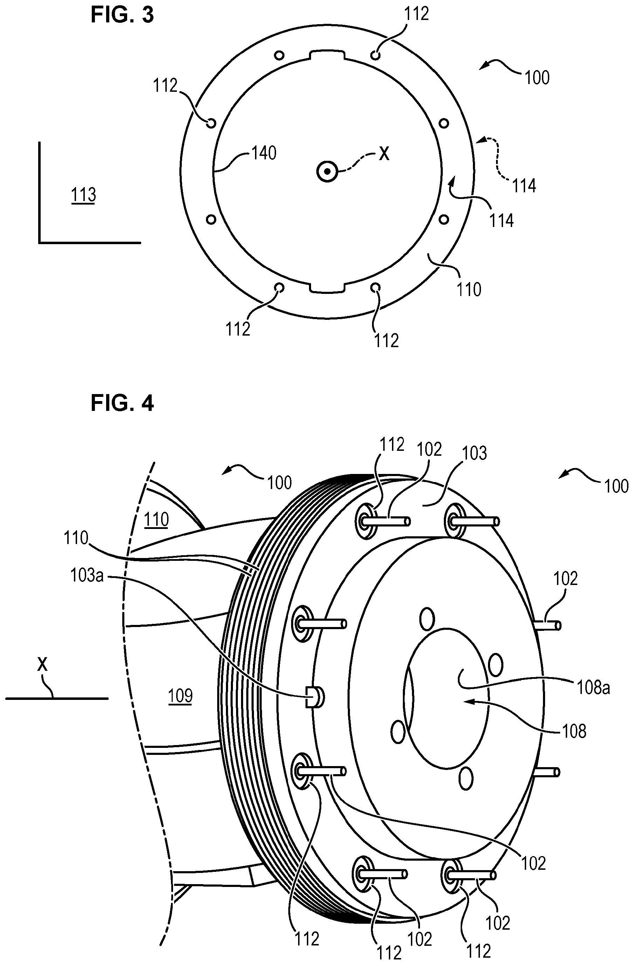

Un support radial 103, 203 est fixé autour du moyeu 101, 201 et s'étend autour de la première direction X de rotation. Plusieurs tiges inclinables 102, 202 sont montées sur le support radial 103, 203. Chaque tige 102, 202 s'étend globalement suivant une deuxième direction longitudinale L. Le support radial 103, 203 comporte plusieurs premiers évidements 105, 205 traversants. Chaque tige 102, 202 traverse un des premiers évidements 105, 205 du support radial 103, 203. Chaque tige 102, 202 et chaque deuxième direction longitudinale L de celle-ci peut être inclinée par rapport au support radial 103, 203 et par rapport à la première direction X de rotation. Il peut être prévu un premier groupe 110a, 210a d'un ou plusieurs des éléments annulaires 110, 210 situés d'un premier côté gauche du support radial 103, 203 et un deuxième groupe 110b, 210b d'un ou plusieurs des éléments annulaires 110, 210 situés d'un deuxième côté droit du support radial 103, 203 (ce groupe 110b n'étant pas représenté à la figure 4).

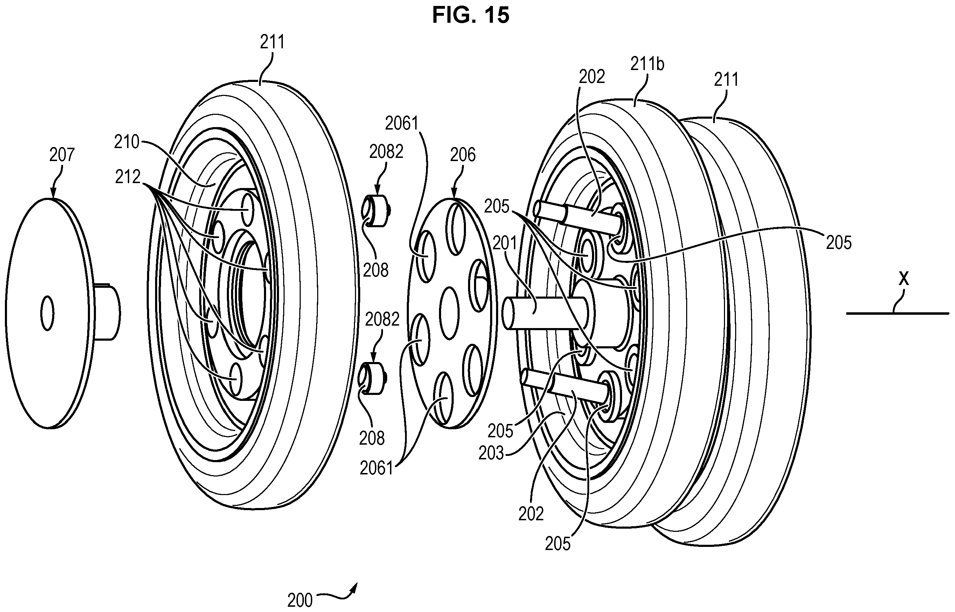

Chaque élément annulaire 110, 210 a plusieurs deuxièmes évidements 112, 212 traversants. Chaque tige 102, 202 traverse un deuxième évidement 112, 212. Chaque tige 102, 202 est montée coulissante en translation suivant la deuxième direction longitudinale L au travers du deuxième évidement 112, 212 que cette tige 102, 202 traverse. Ainsi, lorsque les tiges 102, 202 sont inclinées, les deuxièmes évidements 112, 212 et donc les éléments annulaires 110, 210 se déplacent en translation par rapport aux tiges 102, 202 traversant les deuxièmes évidements 112, 212 suivant la deuxième direction longitudinale L (la deuxième direction longitudinale L de la tige 102, 202 pouvant être inclinée par rapport à la première direction X de rotation). Les tiges 102, 202, les premiers évidements 105, 205 et les deuxièmes évidements 112, 212 sont distincts les uns des autres et répartis autour du moyeu 101, 201 et autour de la première direction X de rotation, en un nombre quelconque d'au moins deux, par exemple d'une manière équi-angulaire autour du moyeu 101, 201 et autour de la première direction X de rotation, par exemple avec aux figures 1, 2 et 11 à 18 deux premiers évidements 105, 205, deux deuxièmes évidements 112, 212 et deux tiges 102, 202, qui sont répartis à 180° d'intervalles autour du moyeu 101, 201 et autour de la première direction X de rotation, ou aux figures 3 et 4 huit premiers évidements 105, huit deuxièmes évidements 112 et huit tiges 102, qui sont répartis à 45° d'intervalles autour du moyeu 101 et autour de la première direction X de rotation, ou aux figures 15 à 18 six premiers évidements 205, six deuxièmes évidements 212 et six tiges 202, qui sont répartis à 60° d'intervalles autour du moyeu 101, 201 et autour de la première direction X. Les premiers évidements 105, 205 et les deuxièmes évidements 112, 212 peuvent être de section circulaire ou autres, transversalement à la première direction X de rotation. Les tiges 102, 202 peuvent être de section circulaire ou autres, transversalement à la deuxième direction longitudinale L.

Les éléments annulaires 110, 210 ont chacun des guidages en translation dans des plans 113, 213 perpendiculaires à la première direction X.

Les éléments annulaires 110, 210 comportent un trou central 140, 240 en leur centre pour le passage du moyeu 101, 201 dans ce trou central 140, 240. Les dimensions du trou central 140, 240 des éléments annulaires 110, 210 perpendiculairement à la première direction X de rotation sont supérieures à celles du moyeu 101, 201. Les éléments annulaires 110, 210 peuvent avoir des guidages en translation dans des plans 113, 213 perpendiculaires à la première direction X de rotation, et ce par contact plan contre plan l'un contre l'autre et/ou par rapport à des flasques 106, 107, 206, 207 fixés au moyeu 101, 201 et/ou par rapport au support radial 103, 203. Les éléments annulaires 110, 210 peuvent ainsi translater dans des plans 113, 213 perpendiculaires à la première direction X de rotation.

Lorsque le dispositif 100, 200 de roulement roule et rencontre un support extérieur SUP de roulage courbe, les tiges 102, 202 s'inclinent, les éléments annulaires 110, 210 coulissent verticalement dans les plans 113 l'un par rapport à l'autre pour s'adapter à la courbure du support extérieur SUP de roulage et les tiges 102, 202 translatent dans les évidements 112, 212 des éléments annulaires 110, 210 (liaisons linéaires annulaires des tiges 102, 202 dans les évidements 112, 212 des éléments annulaires 110, 210 par rapport aux éléments annulaires 110, 210, c'est-à-dire une translation suivant la direction L longitudinale des tiges 102, 202 et trois rotations). La distance horizontale entre les éléments annulaires 110, 210 suivant la première direction X de rotation est constante lorsque les tiges 102, 202 s'inclinent par rapport au moyeu 101.

Suivant un mode de réalisation de l'invention, ainsi que représenté aux figures 1 et 11 à 18, le dispositif 100, 200 de roulement comporte des rotules intermédiaires 104, 204 logées respectivement dans les premiers évidements 105, 205 du support radial 103, 203. Les rotules intermédiaires 104, 204 relient les tiges 102, 202 d'une manière rotative au support radial 103, 203.

Suivant un mode de réalisation de l'invention, ainsi que représenté aux figures 1 et 11 à 18, chaque rotule intermédiaire 104, 204 comporte une première bille 1040, 2040 retenue dans chaque premier évidement 105, 205 du support radial 103, 203. Chaque première bille 1040, 2040 est apte à tourner dans le premier évidement 105, 205 et comporte un premier trou traversant 1041, 2041. Chaque tige 102, 202 traverse le premier trou 1041, 2041 de la première bille 1040, 2040 et est montée de manière à pouvoir coulisser en translation dans la première bille 1040, 2040 suivant la deuxième direction longitudinale L lorsque les tiges 102, 202 sont inclinées.

Suivant un mode de réalisation de l'invention, dans chaque premier évidement 105, 205 du support radial 103, 203 est fixé une bague 1042, 2042 comportant une surface intérieure de glissement en forme de portion de sphère, dans laquelle la première bille 1040, 2040 est retenue rotative.

Suivant un mode de réalisation de l'invention, dans les premiers évidements 105, 205 et/ou dans les deuxièmes évidements 112, 212 peuvent se trouver des éléments élastiques, non représentés.

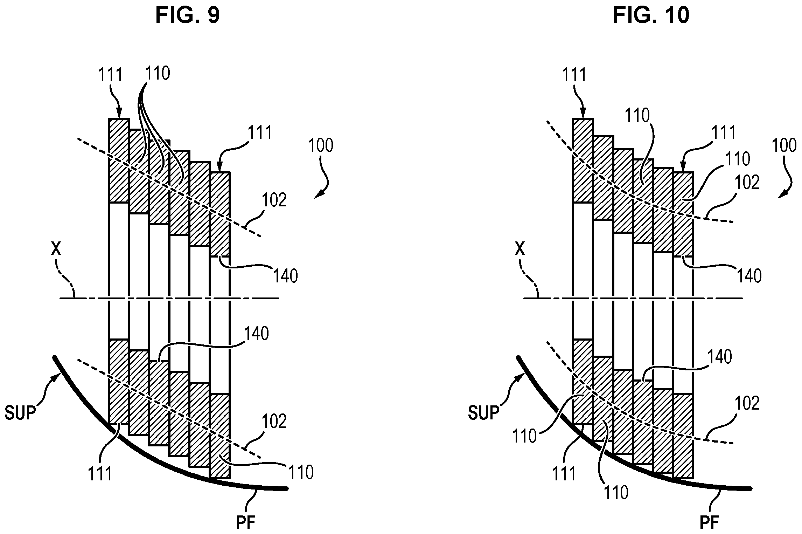

Suivant un mode de réalisation de l'invention, ainsi que représenté à la figure 9, les tiges 102 peuvent être rigides. Les tiges 202 peuvent également être rigides.

Suivant un mode de réalisation de l'invention, ainsi que représenté à la figure 10, les tiges 102 peuvent être souples. Les tiges 202 peuvent également être souples. Cela permet un coulissement vertical plus grand des éléments annulaires 110, 210 dans les plans 113. L'élasticité des tiges 102, 202 permet d'une part, d'épouser de manière réversible les irrégularités quand elles existent et d'autre part, de résister au chargement mécanique.

Ci-dessous, la description est donnée pour la première famille de modes de réalisation du dispositif 100 de roulement dit de type à roue magnétique, en référence aux figures 1 à 10, 19 et 20.

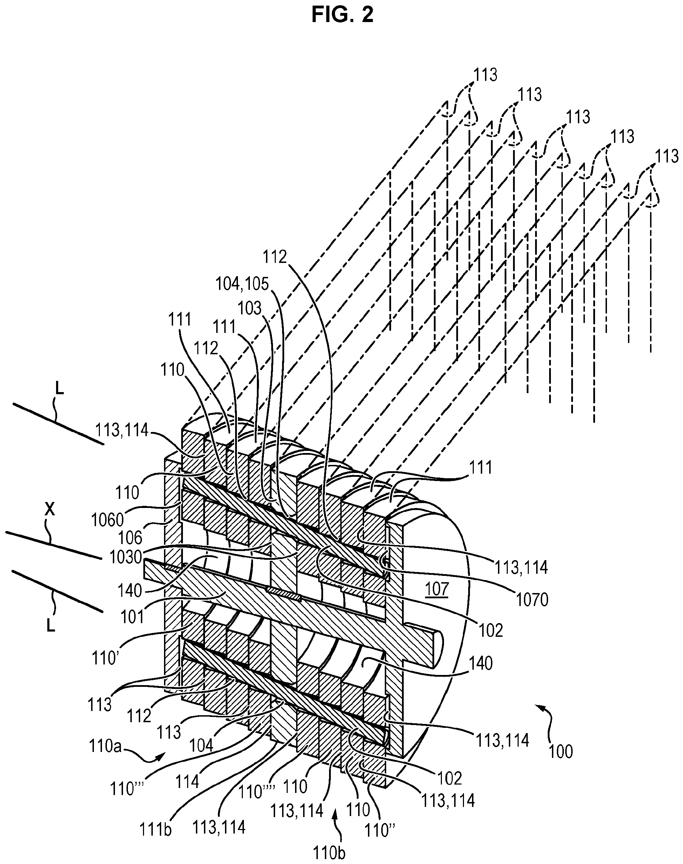

Suivant un mode de réalisation de l'invention, dans le dispositif 100 de roulement, les éléments annulaires 110 sont en forme de rondelles annulaires planes. Chaque élément annulaire 110 est délimité de chaque côté par des surfaces latérales planes 114, qui sont situées dans les plans 113 perpendiculaires à la première direction X. Ces plans 113 peuvent donc être verticaux lorsque la première direction X de rotation est horizontale. Au moins certaines des surfaces latérales planes 114 sont en contact l'une contre l'autre dans certains des plans 113 et sont guidées l'une contre l'autre en translation dans certains des plans 113 perpendiculaires à la première direction X, c'est-à-dire selon des appuis plans. Par exemple, tous les éléments annulaires 110 du groupe 110a et/ou du groupe 110b ou l'ensemble des éléments annulaires 110 sont en contact l'un contre l'autre par leurs surfaces latérales planes 114 adjacentes dans des plans 113 perpendiculaires à la première direction X et sont guidés en translation par ces surfaces latérales planes 114 adjacentes dans ces plans 113 perpendiculaires à la première direction X. A la figure 2, au moins un premier 110', 110" des éléments annulaires 110, ou élément annulaire 110', 110" d'extrémité est guidé par sa surface latérale plane 114 extérieure en translation dans un plan 113 perpendiculaire à la première direction X contre une surface plane 1060, 1070 de flasques 106, 107 d'extrémité, fixés au moyeu 101, selon un appui plan. Ces surfaces planes 1060, 1070 sont situées dans des plans 113 perpendiculaires à la première direction X de rotation. Au moins un deuxième 110'", 110"" des éléments annulaires 110, ou élément annulaire 110'", 110"" extérieur est guidé par sa surface latérale plane 114 intérieure en translation dans un plan 113 perpendiculaire à la première direction X contre une surface plane 1030 du support radial 103, selon un appui plan. Ces surfaces planes 1030 sont situées dans des plans 113 perpendiculaires à la première direction X.

Suivant un mode de réalisation de l'invention, dans le dispositif 100 de roulement, les éléments annulaires 110 sont en un matériau ferromagnétique. Par exemple, le matériau ferromagnétique des éléments annulaires 110, y compris de leur surface périphérique 111 de roulement, peut être en acier doux. Les surfaces latérales planes 114, la surface plane 1060, 1070, la surface plane 1030 peuvent être réalisées avec des pièces mécaniques qui limitent les frottements. Ainsi ces surfaces formant des appuis plans peuvent être recouvertes d'au moins une couche d'un matériau antifriction, par exemple et non limitativement en bronze, ou en graphite ou en nylon ou autres. Par exemple, au moins huit éléments annulaires 110 sont prévus, par exemple au moins quatre éléments annulaires 110 dans chacun des groupes 110a et 110b, ainsi que représenté aux figures 1, 2, 4, 9 et 10.

Suivant un mode de réalisation de l'invention, ainsi que représenté aux figures 1 et 4, le moyeu 101 est annulaire autour de la première direction X de rotation.

Suivant un mode de réalisation de l'invention, ainsi que représenté aux figures 1 et 4, le dispositif 100 de roulement comporte un axe mécanique 108 ou bloc 108 ou essieu 108, qui s'étend suivant une certaine longueur le long de la première direction X de rotation et un certain diamètre autour la première direction X de rotation. Le moyeu 101 annulaire est monté rotatif autour de l'axe mécanique 108 autour de la première direction X de rotation. L'axe mécanique 108 portant le moyeu 101 est fixé à un côté gauche d'un châssis 109 et/ou un autre axe mécanique 108 portant un autre moyeu 101 et d'autres éléments 110 d'un autre dispositif 100 tel que décrit ci-dessus est fixé à un côté droit du châssis 109. L'axe mécanique 108 peut être d'une seule pièce avec le châssis 109. Par exemple, le châssis 109 peut être situé entre deux axes mécaniques 108 portant chacun un moyeu 101 et le dispositif 100 décrit ci-dessus. Le bas des surfaces 111 périphériques de roulement des éléments 110 est situé au-dessous du niveau du châssis 109.

Suivant un mode de réalisation de l'invention, ainsi que représenté aux figures 1, 4, 5 et 6, l'axe mécanique 108 ou bloc 108 ou essieu 108 comporte un générateur 115, configuré pour pouvoir générer un champ magnétique au travers de la surface périphérique 111 de roulement des éléments annulaires 110. On peut ainsi former par les éléments annulaires 110 une roue magnétique 100 pouvant exercer une force d'attraction vers la paroi ferromagnétique PF du support SUP extérieur de roulage. Le générateur est configuré pour permettre d'annuler ou de moduler l'intensité du flux magnétique généré.

Suivant un mode de réalisation de l'invention, ainsi que représenté à la figure 1, un palier 108a et/ou 108b de roulement peut être prévu entre le moyeu 101 et l'axe mécanique 108, pour diminuer les pertes énergétiques. L'axe mécanique 108 peut comporter une joue latérale intérieure 108c se trouvant en saillie d'une partie extérieure 108d. Les premiers paliers 108a de roulement sont prévus sur la surface cylindrique de la partie extérieure 108d contre une surface intérieure cylindrique du moyeu 101. Les deuxièmes paliers 108b de roulement sont prévus sur la surface annulaire de la joue latérale intérieure 108c contre une surface annulaire du moyeu 101. Le palier 108a de roulement peut être entouré d'une bague extérieure 108f autour de la première direction X de rotation.

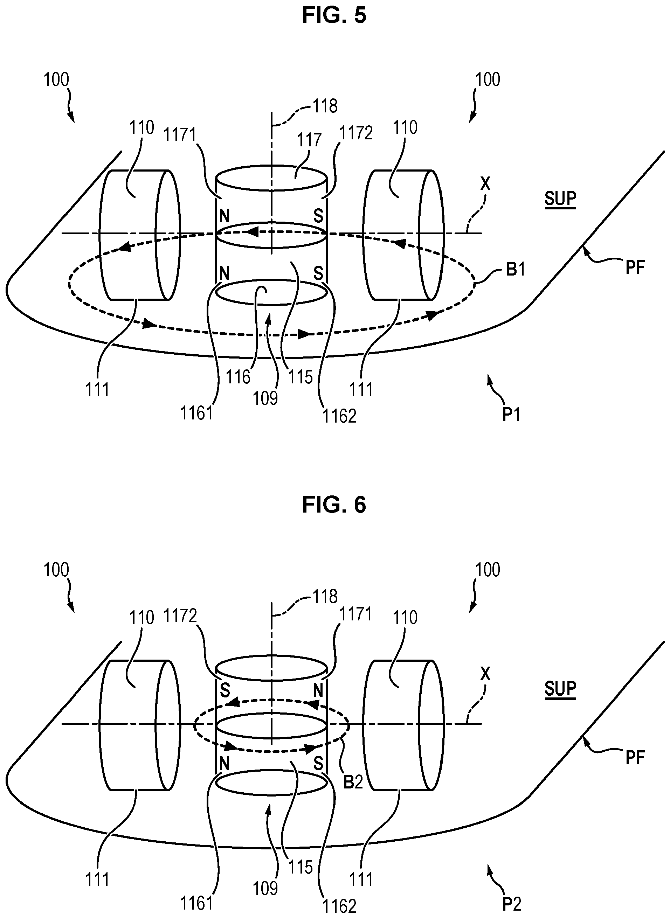

Suivant un mode de réalisation de l'invention, ainsi que représenté aux figures 1, 5 et 6, le générateur 115 comporte des aimants permanents 116, 117 commandables (mobiles) pour aimanter ou non les surfaces périphériques 111 de roulement contre la paroi ferromagnétique PF du support SUP contre lequel doit rouler le dispositif 100. Le générateur 115 permet de générer un champ magnétique B1 qui va boucler depuis le générateur 115 dans les éléments annulaires 110 puis au travers de leur surface périphérique 111 de roulement contre la paroi ferromagnétique PF, ainsi que représenté aux figures 5 et 20, pour exercer une force d'attraction des éléments annulaires 110 contre cette paroi ferromagnétique PF.

Suivant un mode de réalisation de l'invention, ainsi que représenté aux figures 1, 5 et 6, le générateur 115 comporte un premier aimant permanent inférieur 116, ayant un premier pôle nord 1161 et un premier pôle sud 1162. Le générateur 115 comporte un deuxième aimant permanent supérieur 117, qui est situé au-dessus du premier aimant permanent 116. Le deuxième aimant permanent supérieur 117 a un deuxième pôle nord 1171 et un deuxième pôle sud 1172. Les premier et deuxième aimants permanents 116, 117 sont mobiles en rotation l'un par rapport à l'autre autour d'un axe 118 de rotation vertical et peuvent être cylindriques autour de l'axe 118 de rotation vertical. Les premier et deuxième aimants permanents 116, 117 peuvent occuper une première position P1 de rotation autour de l'axe 118 de rotation vertical, dans laquelle le deuxième pôle nord 1171 est au-dessus du premier pôle nord 1161, le deuxième pôle sud 1172 est au-dessus du premier pôle sud 1162 et les pôles nord 1161, 1171 ou les pôles sud 1162, 1172 sont orientés vers la première direction X de rotation, ainsi que représenté à la figure 5. Les premier et deuxième aimants permanents 116, 117 peuvent occuper une deuxième position P2 de rotation autour de l'axe 118 de rotation vertical, dans laquelle le deuxième pôle nord 1171 est au-dessus du premier pôle sud 1162 et le deuxième pôle sud 1172 est au-dessus du premier pôle nord 1161, ainsi que représenté à la figure 6. Dans la première position P1, l'attraction magnétique des surfaces périphériques 111 de roulement des éléments annulaires 110 vers la paroi ferromagnétique PF du support extérieur SUP de roulage est plus grande que dans la deuxième position P2. Dans la première position P1, le flux magnétique B1 boucle par les surfaces périphériques 111 de roulement des éléments annulaires 110 vers la paroi ferromagnétique PF, ce qui crée une force d'attraction entre elles, ainsi que représenté aux figures 5 et 20. Dans la deuxième position P2, le champ magnétique B2 boucle, non plus à travers la paroi ferromagnétique PF, mais uniquement entre les aimants permanents 116 et 117, ce qui crée une bien plus faible attraction entre les surfaces périphériques 111 de roulement des éléments annulaires 110 et la paroi ferromagnétique PF, ainsi que représenté à la figure 6. Si dans la deuxième position les polarités des aimants 116 et 117 sont correctement inversées (rotation de 180°), l'attraction s'annule. Par exemple, le premier aimant permanent inférieur 116 peut être fixe dans le bloc 108 en ayant le premier pôle nord 1161 et le premier pôle sud 1162 qui sont orientés parallèlement à la première direction X de rotation, et c'est le deuxième aimant permanent supérieur 117 qui est mobile en rotation autour de l'axe 118 de rotation vertical. En variante, le deuxième aimant permanent supérieur 117 peut être fixe dans le bloc 108, en ayant le deuxième pôle nord 1171 et le deuxième pôle sud 1172 qui sont orientés parallèlement à la première direction X de rotation, et c'est le premier aimant permanent inférieur 116 qui est mobile en rotation autour de l'axe 118 de rotation vertical. En variante, à la fois le premier aimant permanent inférieur 116 et le deuxième aimant permanent supérieur 117 sont mobiles en rotation autour de l'axe 118 de rotation vertical. Le générateur 115 comporte un dispositif de commande, par exemple un actionneur asservi, pour provoquer la rotation des premier et deuxième aimants permanents 116, 117 l'un par rapport à l'autre autour de l'axe 118 de rotation vertical pour les faire arriver et les maintenir dans la première position P1 ou dans la deuxième position P2 ou dans une position intermédiaire entre ces positions P1 et P2 (angle inférieur à 180°entre les polarités des aimants 116 et 117). Celui-ci permet de déplacer un des ou les aimants d'un angle déterminé qui, dans le cas de rotations inférieures à 180° autour de l'axe 118 dans la position intermédiaire, permet de moduler l'intensité du champ magnétique transitant dans la paroi PF et donc permet de moduler l'effort d'attraction exercé par les surfaces 111 de roulement. Cette modulation peut être utilisée dans certains cas particuliers de franchissement d'obstacles au sein de conduites (soudures épaisses, rivets ...).

Bien entendu, dans d'autres modes de réalisation de l'invention, le générateur 115 peut comporter un (ou plusieurs) bobinage électrique, par lesquels on peut aimanter ou non les surfaces périphériques 111 de roulement contre la paroi ferromagnétique PF, par exemple en envoyant différentes valeurs de courant électrique dans le bobinage électrique ou en modifiant l'orientation du bobinage électrique par rapport à la première direction X de rotation et par rapport au bloc 108.

Dans le cas du dispositif 100 de roulement du type à roue magnétique décrit ci-dessus, le fait que les éléments annulaires 111 puissent coulisser dans les plans 113 augmente leur surface en contact avec la paroi ferromagnétique PF contre laquelle ils roulent. L'invention permet ainsi d'accroître la capacité de transmission d'un flux magnétique à travers ce même contact, ce qui permet de garantir une force d'attraction adaptée pour le maintien du transporteur sur son support PF extérieur de roulage et, dans le cas où le dispositif 100 est moteur, une force propulsive suffisante pour la mise en mouvement. Cela permet de répondre à la problématique des robots magnétiques comme véhicules 300 qui se déplacent contre des parois ferromagnétiques, éventuellement à fortes pentes. Ces parois ferromagnétiques PF peuvent être des conduites forcées (telles que décrites ci-après), des coques et cuves de navires, des ouvrages d'art (ponts métalliques, bâtiments), des citernes et autres réservoirs, des pipelines et autres ouvrages de l'industrie du pétrole, des éoliennes on et offshore. Les robots magnétiques comme véhicules 300 peuvent être dédiés à différentes missions : observations avec retour vidéo, scans de géométries, nettoyage, mesure d'épaisseur de parois, contrôle de soudures, mesures chimiques diverses, mise en peinture, soudure automatique sur chantier. Dans le cas de conduites forcées, l'invention trouve alors son avantage, car les supports extérieurs SUP de roulage sont de forme cylindrique (donc courbe) et sont fortement inclinés pour atteindre une hauteur d'eau suffisante à la production hydroélectrique. De plus, les épaisseurs de peintures présentes dans les conduites peuvent diminuer la capacité d'adhérence des roues. Les conduites forcées, comme toutes les installations industrielles font l'objet d'inspections pour prévenir la maintenance. Ces conditions d'inspection sont actuellement difficiles car réalisées par des opérateurs encordés qui doivent se déplacer sur plusieurs centaines de mètres, dans un milieu exigu, mal ventilé et parfois toxique du fait de la présence de peintures amiantées. Ce type d'inspection n'est pas possible pour les conduites dont les diamètres sont inférieurs au mètre. L'invention permet de déplacer un robot muni du dispositif 100 de roulement contre la surface concave (par exemple cylindrique circulaire) présente à l'intérieur des conduites forcées, y compris de maintenir ce robot aimanté contre la paroi PF de ces conduites forcées. Grâce à l'invention, le robot doté du dispositif 100 de roulement suivant l'invention est capable de rouler en étant plaqué par aimantation magnétique contre la paroi PF de la conduite, et ce dans le sens de sa longueur, ou dans un plan transversal à sa longueur (i.e. sur une section de conduite, y compris pour gravir des pentes contre la paroi PF), mais aussi suivant une combinaison de ces deux mouvements (i.e. trajectoire en forme d'hélice ou autrement tridimensionnelle). Le dispositif suivant l'invention permet de rattraper les irrégularités de contact contre la paroi PF.

Les robots magnétiques présents sur le marché sont souvent utilisables sur des supports dont les rayons de courbure sont supérieurs à plusieurs mètres. Ces robots connus compensent la non adaptabilité à la surface courbe par l'utilisation d'électro-aimants puissants alimentés par fil électrique ombilical relié à une alimentation électrique fixe distante, ce qui limite les distances d'intervention. Le robot doté du dispositif 100 de roulement suivant l'invention s'adapte à la géométrie de la paroi PF et, dans le cas où le générateur 115 comporte les aimants permanents 116, 117, ne nécessite pas d'alimentation électrique externe. L'ombilical n'étant donc pas nécessaire, le contrôle à distance du robot peut être effectué sans fil et par une liaison de télécommunication par antennes, par exemple en Wifi. Ceci permet d'atteindre des distances théoriques d'intervention de plusieurs centaines de mètres.

La maintenance de la roue magnétique suivant l'invention est aisée et peu coûteuse. Les éléments annulaires 110 et le support radial 103 se changent rapidement et sont obtenus simplement par découpes de tôles au laser. Un utilisateur connaissant la géométrie de ceux-ci peut donc les faire découper sans passer par un revendeur.

Suivant un mode de réalisation de l'invention, ainsi que représenté à la figure 4, le support radial 103 est lié en rotation au moyeu 101 par l'ajout de clavettes 103a.

Suivant un mode de réalisation de l'invention, ainsi que représenté aux figures 1 et 4, le support radial 103 ne porte pas de surface périphérique de roulement et est en retrait par rapport aux surfaces 111 de roulement des éléments annulaires 110.

Suivant un mode de réalisation de l'invention, ainsi que représenté à la figure 2, le support radial 103 porte une autre surface périphérique 111b de roulement.

Suivant un mode de réalisation de l'invention, le dispositif 100, 200 de roulement peut être moteur, pour former une roue motrice. Dans ce cas, le moyeu 101, 201 est moteur et reçoit une puissance mécanique d'un actionneur rotatif, non représenté.

Suivant un mode de réalisation de l'invention, le dispositif 100, 200 de roulement peut être passif, c'est-à-dire non moteur, pour former une roue libre de tourner autour de la direction X de rotation et non motrice. Dans ce cas, le moyeu 101, 201 est passif.

Suivant un mode de réalisation de l'invention, ainsi que représenté à la figure 1, dans le cas où le dispositif 100 de roulement est moteur, la mise en rotation du moyeu 101 autour de la première direction X de rotation est assurée par un pignon 130 fixé au moyeu 101 et entraîné en rotation par une chaîne.

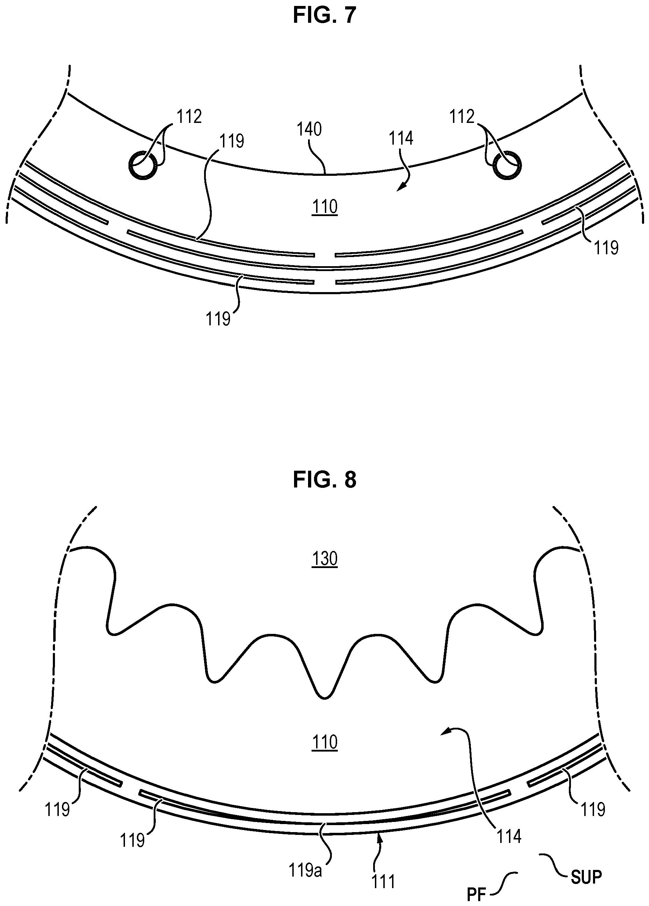

Suivant un mode de réalisation de l'invention, ainsi que représenté aux figures 7 et 8, une (ou plusieurs) rainure 119 sont prévues dans au moins une, certaines ou toutes les surfaces latérales planes 114 des éléments annulaires 110, et ce à proximité de sa surface périphérique 111 de roulement le long de celle-ci. La ou les rainures 119 sont débouchantes, c'est-à-dire ouvertes vers l'extérieur. La ou les rainures 119 peuvent s'étendre en arc de cercle le long de la surface périphérique 111 de roulement, ou peuvent être d'une autre forme. Les deux surfaces latérales 114 de chaque élément annulaire 110 peuvent comporter chacune une ou plusieurs rainures 119. A la figure 7, les rainures 119 sont représentées non aplaties. A la figure 8, les rainures 119 sont représentées aplaties en 119a sur la paroi ferromagnétique PF. Cela permet d'augmenter la capacité de déformation de la surface périphérique 111 de roulement. La géométrie des rainures 119 est définie afin de conférer à la surface périphérique 111 de roulement de l'élément annulaire 110 une déformabilité adaptée et une résistance suffisante sans induire de déformations permanentes après mise en charge. La surface de contact ainsi majorée de la surface 111 améliore le bouclage du champ magnétique et permet donc l'augmentation de la force d'attraction.

Ci-dessous, la description est donnée en référence aux figures 11 à 19 pour la deuxième famille de modes de réalisation d'un dispositif 200 de roulement dit de type roue terrestre.

Suivant un mode de réalisation de l'invention, le moyeu 201 est central et aligné avec la première direction X de rotation.

Suivant un mode de réalisation de l'invention, dans le dispositif 200 de roulement, les différents éléments annulaires 110 sont espacés entre eux le long de la première direction X de rotation. Un premier flasque 206 et un deuxième flasque 207 sont prévus et associés à chaque élément annulaire 210 pour assurer le guidage en translation de cet élément annulaire 210 dans un plan 213 perpendiculaire à la première direction X entre une surface plane 2060 de ce premier flasque 206 associé et une surface plane 2070 du deuxième flasque 207 associé et contre ces surfaces planes 2060 2070. La surface plane 2060 du premier flasque 206 associé et la surface plane 2070 du deuxième flasque 207 associé sont perpendiculaires à la première direction X. Pour les différents éléments annulaires 110, les premiers flasques 206 sont distants les uns des autres le long de la première direction X et sont à distance du support radial 203. Pour les différents éléments annulaires 110, les deuxièmes flasques 207 sont distants les uns des autres le long de la première direction X et sont à distance du support radial 203. Les premiers flasques 206 et les deuxièmes flasques 207 sont fixés au moyeu rotatif 201. Les premiers flasques 206 et les deuxièmes flasques 207, qui sont situés entre les flasques 206, 207 situés aux extrémités du moyeu 101, peuvent comporter des trous traversants 2061, 2071 pour le passage dedans de chaque tige 202, ces trous traversants 2061, 2071 étant beaucoup plus grands que la section transversale des tiges 202 pour permettre l'inclinaison des tiges 202 avec un certain débattement angulaire.

Suivant un mode de réalisation de l'invention, une deuxième bille 208 est retenue rotative dans chaque deuxième évidement 212 de chaque élément annulaire 210. La deuxième bille 208 est apte à tourner dans le deuxième évidement 212. La deuxième bille 208 comporte un deuxième trou traversant 209. Chaque tige 202 traverse le deuxième trou traversant 209 de la deuxième bille 208 et est montée de manière à pouvoir coulisser en translation dans deuxième bille 208 suivant la deuxième direction longitudinale L lorsque les tiges 202 sont inclinées.

Suivant un mode de réalisation de l'invention, dans chaque deuxième évidement 212 de chaque élément annulaire 110 est fixée une bague 2082 comportant une surface intérieure de glissement en forme de portion de sphère, dans laquelle la deuxième bille 208 est retenue rotative.

Suivant un mode de réalisation de l'invention, ainsi que représenté aux figures 11, 12 et 15 à 18, le support radial 203 porte une autre surface périphérique 211b de roulement, par exemple formée par un pneu 211b.

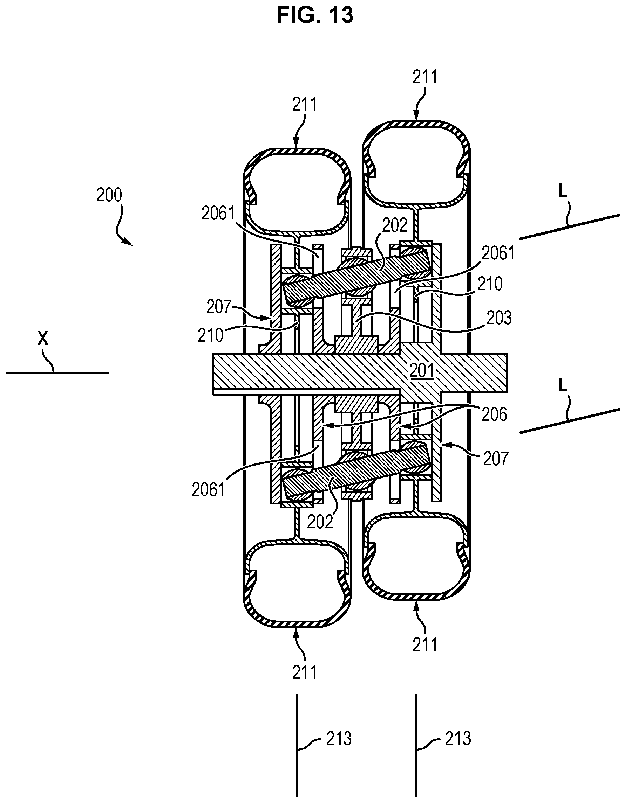

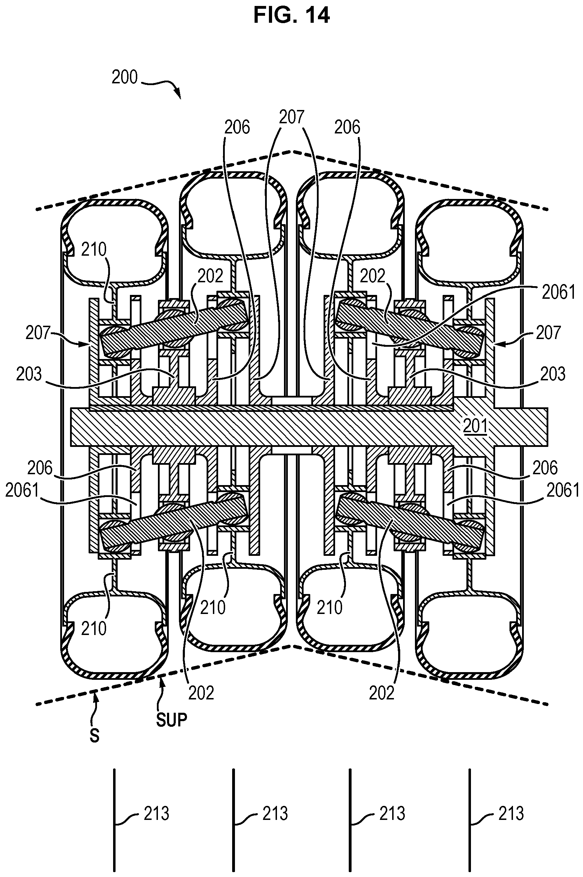

Suivant un mode de réalisation de l'invention, ainsi que représenté aux figures 13 et 14, le support radial 203 ne porte pas de surface périphérique de roulement et est en retrait par rapport aux surfaces 211 de roulement des éléments annulaires 210.

Suivant un mode de réalisation de l'invention, ainsi que représenté aux figures 11, et 13 à 18, un élément annulaire 210 est situé d'un premier côté gauche du support radial 203 et un autre élément annulaire 210 est situé d'un premier côté droit du support radial 203.

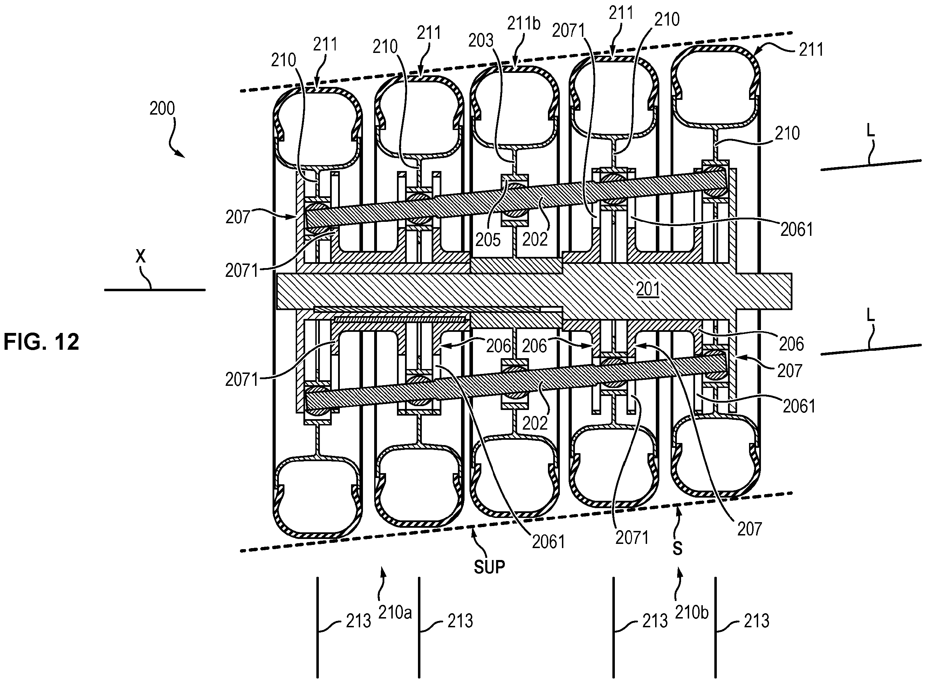

Suivant un mode de réalisation de l'invention, ainsi que représenté à la figure 12, un premier groupe 210a de plusieurs éléments annulaire 210, par exemple de deux éléments annulaires 210, est situé d'un premier côté gauche du support radial 203 et un deuxième groupe 210b de plusieurs éléments annulaire 210, par exemple de deux éléments annulaires 210, est situé d'un premier côté droit du support radial 203.

Suivant un mode de réalisation de l'invention, ainsi que représenté à la figure14, plusieurs (par exemple deux) dispositifs 200 de roulement peuvent être prévus sur le même moyeu 201, l'un à côté de l'autre le long de la direction X de rotation.

Dans le cas des transporteurs terrestres classiques dotés du dispositif 200 de roulement, qui se déplacent, en particulier, sur des sols S accidentés, la solution proposée permet une adaptation des roues aux irrégularités du support SUP de roulage, tout en autorisant la transmission de puissance nécessaire à la propulsion. Cette adaptation augmente la surface de contact et induit une diminution de la pression au sein du contact surface 211 de roulement / sol S.

La diminution de la pression de contact permet la préservation du support SUP de roulage : limitation de la compaction des sols S agricoles (terres ensemencées) ou des sols S forestiers (terre, sable, humus), non destruction des voiries fragiles (sol S empierré, glace dans les régions polaires...), non arrachement du sol S par réduction des contraintes locales de cisaillement générées par les forces propulsives ou par les pentes dans lesquelles évolue le transporteur 300. Ce dernier point implique un accroissement de la capacité propulsive du transporteur 300, ainsi qu'un accroissement de son adhérence dans les fortes pentes. La diminution de la pression de contact permet aussi la préservation de la surface 211 de roulement, ce qui conduit à l'utilisation de technologies de pneumatiques moins spécifiques et donc moins onéreuses mais aussi l'augmentation de la capacité de charge du transporteur 300. Enfin, du fait de la cinématique des surfaces 211 de roulement, cela permet d'améliorer la capacité du transporteur 300 à franchir des obstacles locaux (par exemple : roches sur support SUP de roulage). En effet, le soulèvement d'un ou plusieurs éléments annulaires 210 limite le soulèvement global du véhicule 300.

Le dispositif 200 de roulement peut s'adapter facilement en lieu et place des roues existantes sur les véhicules 300 terrestres. En cas de crevaison d'un pneu, le véhicule 300 peut continuer de rouler sous réserve de respecter la charge maximale autorisée par pneu. Le véhicule terrestre 300 doté du dispositif 200 de roulement peut être un tracteur, un camion, un compacteur, un chasse-neige, ou plus généralement un engin agricole, un engin de chantier, un engin forestier, ou autres.

## Revendications

1. Dispositif (100, 200) de roulement, comportant :
un moyeu rotatif (101, 201), apte à tourner autour d'une première direction (X) de rotation, des éléments annulaires (110, 210), disposés autour du moyeu rotatif (101, 201) et portant chacun une surface périphérique (111, 211) de roulement,
des tiges (102, 202) s'étendant suivant une deuxième direction longitudinale (L),
un support radial (103, 203), solidaire du moyeu (101, 201) et disposé autour du moyeu (101, 201),
les tiges (102, 202) traversant des premiers évidements (105, 205) du support radial (103, 203) et étant inclinables par rapport au support radial (103, 203),
**caractérisée en ce que**
chaque élément annulaire (110, 210) a des deuxièmes évidements (112, 212), au travers desquels les tiges (102, 202) sont aptes à coulisser en translation suivant la deuxième direction longitudinale (L) lorsque les tiges (102, 202) sont inclinées,
les éléments annulaires (110, 210) ayant chacun des guidages en translation dans des plans (113, 213) perpendiculaires à la première direction (X).

2. Dispositif (100, 200) de roulement suivant la revendication 1, **caractérisé en ce que** les éléments annulaires (110, 210) ont des guidages en translation dans des plans (113, 213) perpendiculaires à la première direction (X) par contact plan contre plan l'un contre l'autre et/ou par rapport à des flasques (106, 107, 206, 207) fixés au moyeu (101, 201) et/ou par rapport au support radial (103, 203).

3. Dispositif (100) de roulement suivant la revendication 1 ou 2, **caractérisé en ce que** les éléments annulaires (110) sont délimités par des surfaces latérales planes (114), qui sont situées dans les plans (113) perpendiculaires à la première direction (X) et qui sont guidées au moins pour certaines de ces surfaces latérales planes (114) l'une contre l'autre en translation dans lesdits plans (113),
au moins un premier (110', 110") des éléments annulaires (110) étant guidé en translation dans un plan (113) perpendiculaire à la première direction (X) contre une surface plane (1060, 1070) d'un flasque (106, 107) d'extrémité, située dans un plan (113) perpendiculaire à la première direction (X),
au moins un deuxième (110‴, 110ʺʺ) des éléments annulaires (110) étant guidé en translation dans un plan (113) perpendiculaire à la première direction (X) contre une surface plane (1030) du support radial (103), située dans un plan (113) perpendiculaire à la première direction (X).

4. Dispositif (100) de roulement suivant la revendication 3, **caractérisé en ce que** les éléments annulaires (110) sont en un matériau ferromagnétique, le dispositif (100) de roulement comporte en outre un axe mécanique (108), qui s'étend suivant la première direction (X) de rotation et autour duquel le moyeu (101) est monté rotatif, l'axe mécanique (108) comportant un générateur (115), apte à générer un champ magnétique au travers de la surface périphérique (111) de roulement des éléments annulaires (110) pour former par les éléments annulaires (110) une roue magnétique (100).

5. Dispositif (100) de roulement suivant la revendication 4, **caractérisé en ce que** le générateur (115) comporte un premier aimant permanent (116) ayant un premier pôle nord (1161) et un premier pôle sud (1162), et un deuxième aimant permanent (117) situé au-dessus du premier aimant permanent (116) et ayant un deuxième pôle nord (1171) et un deuxième pôle sud (1172), les premier et deuxième aimants permanents (116, 117) étant mobiles l'un par rapport à l'autre autour d'un axe (118) de rotation vertical pour pouvoir prendre au moins une première position (P1) d'augmentation d'attraction magnétique des surfaces périphériques (111) de roulement, dans laquelle le deuxième pôle nord (1171) est au-dessus du premier pôle nord (1161), le deuxième pôle sud (1172) est au-dessus du premier pôle sud (1162) et les pôles nord (1161, 1171) ou les pôles sud (1162, 1172) sont orientés vers la première direction (X) de rotation, et une deuxième position (P2) de suppression d'attraction magnétique des surfaces périphériques (111) de roulement, dans laquelle le deuxième pôle nord (1171) est au-dessus du premier pôle sud (1162) et le deuxième pôle sud (1172) est au-dessus du premier pôle nord (1161), le générateur (115) comportant un dispositif de commande pour provoquer la rotation des premier et deuxième aimants permanents (116, 117) l'un par rapport à l'autre autour de l'axe (118) de rotation vertical jusque dans la première position (P1) ou jusque dans la deuxième position (P2).

6. Dispositif (100) de roulement suivant la revendication 5, **caractérisé en ce que** le dispositif de commande est apte à provoquer la rotation des premier et deuxième aimants permanents (116, 117) l'un par rapport à l'autre autour de l'axe (118) de rotation vertical jusque dans la première position (P1) ou jusque dans la deuxième position (P2) ou jusque dans au moins une troisième position intermédiaire entre la première position (P1) et la deuxième position (P2).

7. Dispositif (100) de roulement suivant l'une quelconque des revendication 4 à 6, **caractérisé en ce qu'**au moins une des surfaces latérales planes (114) d'au moins un des éléments annulaires (110) comporte à proximité de la surface périphérique (111) de roulement de cet élément annulaire (110) au moins une rainure débouchante (119) le long de la surface périphérique (111) de roulement.

8. Dispositif (200) de roulement suivant la revendication 1 ou 2, **caractérisé en ce que** chaque élément annulaire (210) est guidé en translation dans un plan (213) perpendiculaire à la première direction (X) entre une surface plane (2060) d'un premier flasque (206) prévu pour cet élément annulaire (210) et une surface plane (2070) d'un deuxième flasque (207) prévu pour cet élément annulaire (210) et contre ces surfaces planes (2060, 2070), qui sont perpendiculaires à la première direction (X), les premiers flasques (206) étant distants les uns des autres le long de la première direction (X), étant à distance du support radial (203) et étant fixés au moyeu rotatif (201), les deuxièmes flasques (207) étant distants les uns des autres le long de la première direction (X), étant à distance du support radial (203) et étant fixés au moyeu rotatif (201).

9. Dispositif (200) de roulement suivant la revendication 8, **caractérisé en ce qu'**une deuxième bille (208) est retenue rotative dans chaque deuxième évidement (212) de chaque élément annulaire (210), chaque tige (202) traversant un deuxième trou traversant (209) de la deuxième bille (208) et étant apte à coulisser en translation dans la deuxième bille (208) suivant la deuxième direction longitudinale (L) lorsque les tiges (202) sont inclinées.

10. Dispositif (200) de roulement suivant l'une quelconque des revendications 1, 2, 8 et 9, **caractérisé en ce que** la surface périphérique (211) de roulement est formée par un pneu.

11. Dispositif (100) de roulement suivant l'une quelconque des revendications 1 à 7, **caractérisé en ce que** la surface périphérique (111) de roulement est formée par la surface périphérique extérieure de chaque élément annulaire (110).

12. Dispositif (100, 200) de roulement suivant l'une quelconque des revendications précédentes, **caractérisé en ce qu'**il comporte des rotules intermédiaires (104, 204), chaque rotule intermédiaire (104, 204) étant logée dans chaque premier évidement (105, 205) du support radial (103, 203) et reliant chaque tige (102, 202) d'une manière rotative au support radial (103, 203).

13. Dispositif (100, 200) de roulement suivant la revendication 12, **caractérisé en ce que** chaque rotule intermédiaire (104, 204) comporte une première bille (1040, 2040) retenue rotative dans chaque premier évidement (105, 205) du support radial (103, 203), chaque tige (102, 202) traversant un premier trou traversant (1041, 2041) de la première bille (1040, 2040) et étant apte à coulisser en translation dans la première bille (1040, 2040) suivant la deuxième direction longitudinale (L) lorsque les tiges (102, 202) sont inclinées.

14. Dispositif (100, 200) de roulement suivant la revendication 9 ou 13, **caractérisé en ce que** dans chaque premier évidement (105, 205) du support radial (103, 203) est fixé une bague (1042, 2042) comportant une surface intérieure de glissement en forme de portion de sphère, dans laquelle la première bille (1040, 2040) est retenue rotative et/ou dans chaque deuxième évidement (212) de chaque élément annulaire (110) est fixé une bague (2082) comportant une surface intérieure de glissement en forme de portion de sphère, dans laquelle la deuxième bille (208) est retenue rotative.

15. Dispositif (100, 200) de roulement suivant l'une quelconque des revendications 1 à 14 **caractérisé en ce que** les tiges (102, 202) sont rigides.

16. Dispositif (100, 200) de roulement suivant l'une quelconque des revendications 1 à 14, **caractérisé en ce que** les tiges (102, 202) sont souples.

17. Véhicule roulant (300), comportant un châssis (109) et des roues inférieures (301) de sustentation du châssis (109), les roues étant montées rotatives par rapport au châssis (109), **caractérisé en ce qu'**au moins l'une déterminée des roues (301) est formée par au moins un dispositif (100, 200) de roulement suivant l'une quelconque des revendications précédentes, la roue déterminée (301) étant montée rotative autour de la première direction (X) de rotation et étant apte à rouler sur la surface (111, 211) de roulement.

## Patentansprüche

1. Rollvorrichtung (100, 200), aufweisend:
eine rotierende Nabe (101, 201), die imstande ist, um eine erste Rotationsrichtung (X) zu drehen,
ringförmige Elemente (110, 210), die um die rotierende Nabe (101, 201) angeordnet sind und jeweils eine periphere Rolloberfläche (111, 211) tragen,
Stäbe (102, 202), die sich in einer zweiten Längsrichtung (L) erstrecken,
einen radialen Halter (103, 203), der mit der Nabe (101, 201) fest verbunden und um die Nabe (101, 201) angeordnet ist,
wobei die Stäbe (102, 202) erste Aussparungen (105, 205) des radialen Halters (103, 203) durchqueren und im Verhältnis zum radialen Halter (103, 203) neigbar sind,
**dadurch gekennzeichnet, dass**
jedes ringförmige Element (110, 210) zweite Aussparungen (112, 212) hat, durch die die Stäbe (102, 202) imstande sind, translatorisch in der zweiten Längsrichtung (L) zu gleiten, wenn die Stäbe (102, 202) geneigt sind,
wobei die ringförmigen Elemente (110, 210) jeweils Translationsführungen in Ebenen (113, 213) senkrecht zur ersten Richtung (X) haben.

2. Rollvorrichtung (100, 200) nach Anspruch 1, **dadurch gekennzeichnet, dass** die ringförmigen Elemente (110, 210) Translationsführungen in Ebenen (113, 213) senkrecht zur ersten Richtung (X) durch Kontakt Ebene auf Ebene aneinander und/oder im Verhältnis zu Flanschen (106, 107, 206, 207), die an der Nabe (101, 201) befestigt sind und/oder im Verhältnis zum radialen Halter (103, 203) haben.

3. Rollvorrichtung (100) nach Anspruch 1 oder 2, **dadurch gekennzeichnet, dass** die ringförmigen Elemente (110) durch ebene seitliche Oberflächen (114) begrenzt sind, die sich in den Ebenen (113) senkrecht zu der ersten Richtung (X) befinden und die mindestens für einige dieser ebenen seitlichen Oberflächen (114) translatorisch aneinander in den Ebenen (113) geführt werden,
wobei mindestens ein erstes (110', 110") der ringförmigen Elemente (110) translatorisch in einer Ebene (113) senkrecht zur ersten Richtung (X) an einer ebenen Oberfläche (1060, 1070) eines Endflanschs (106, 107) geführt wird, die sich in einer Ebene (113) senkrecht zur ersten Richtung (X) befindet,
wobei mindestens ein zweites (110‴, 110ʺʺ) der ringförmigen Elemente (110) translatorisch in einer Ebene (113) senkrecht zur ersten Richtung (X) an einer ebenen Oberfläche (1030) des radialen Halters (103) geführt wird, die sich in einer Ebene (113) senkrecht zur ersten Richtung (X) befindet.

4. Rollvorrichtung (100) nach Anspruch 3, **dadurch gekennzeichnet, dass** die ringförmigen Elemente (110) aus einem ferromagnetischem Material sind, wobei die Rollvorrichtung (100) ferner eine mechanische Achse (108) aufweist, die sich in der ersten Rotationsrichtung (X) erstreckt und um welche die Nabe (101) rotatorisch angebracht ist, wobei die mechanische Achse (108) einen Generator (115) aufweist, der imstande ist, ein Magnetfeld durch die periphere Rolloberfläche (111) der ringförmigen Elemente (110) zu erzeugen, um anhand der ringförmigen Elemente (110) ein magnetisches Rad (100) zu bilden.

5. Rollvorrichtung (100) nach Anspruch 4, **dadurch gekennzeichnet, dass** der Generator (115) einen ersten Dauermagneten (116) aufweist, der einen ersten Nordpol (1161) und einen ersten Südpol (1162) hat, und einen zweiten Dauermagneten (117), der sich über dem ersten Dauermagneten (116) befindet und einen zweiten Nordpol (1171) und einen zweiten Südpol (1172) hat, wobei der erste und zweite Dauermagnet (116, 117) im Verhältnis zueinander um eine vertikale Rotationsachse (118) beweglich sind, um mindestens eine erste Position (P1) zur Steigerung der magnetischen Anziehung der peripheren Rolloberflächen (111) einnehmen zu können, in welcher der zweite Nordpol (1171) oberhalb des ersten Nordpols (1161) ist, der zweite Südpol (1172) oberhalb des ersten Südpols (1162) ist und die Nordpole (1161, 1171) oder die Südpole (1162, 1172) zur ersten Rotationsrichtung (X) ausgerichtet sind, und eine zweite Position (P2) zur Unterdrückung der magnetischen Anziehung der peripheren Rolloberflächen (111), in welcher der zweite Nordpol (1171) oberhalb des ersten Südpols (1162) und der zweite Südpol (1172) oberhalb des ersten Nordpols (1161) ist, wobei der Generator (115) eine Steuervorrichtung aufweist, um die Rotation des ersten und zweiten Dauermagneten (116, 117) im Verhältnis zueinander um die vertikale Rotationsachse (118) bis in die erste Position (P1) oder bis in die zweite Position (P2) auslösen zu können.

6. Rollvorrichtung (100) nach Anspruch 5, **dadurch gekennzeichnet, dass** die Steuervorrichtung imstande ist, die Rotation des ersten und zweiten Dauermagneten (116, 117) im Verhältnis zueinander um die vertikale Rotationsachse (118) bis in die erste Position (P1) oder bis in die zweite Position (P2) oder bis in mindestens eine dritte Übergangsposition zwischen der ersten Position (P1) und der zweiten Position (P2) auslösen zu können.

7. Rollvorrichtung (100) nach einem beliebigen der Ansprüche 4 bis 6, **dadurch gekennzeichnet, dass** mindestens eine der ebenen seitlichen Oberflächen (114) von mindestens einem der ringförmigen Elemente (110) in der Nähe der peripheren Rolloberfläche (111) dieses ringförmigen Elements (110) mindestens eine ausmündende Rille (119) entlang der peripheren Rolloberfläche (111) aufweist.

8. Rollvorrichtung (200) nach Anspruch 1 oder 2, **dadurch gekennzeichnet, dass** jedes ringförmige Element (210) translatorisch in einer Ebene (213) senkrecht zur ersten Richtung (X) zwischen einer ebenen Oberfläche (2060) eines ersten Flanschs (206), der für dieses ringförmige Element (210) vorgesehen ist, und einer ebenen Oberfläche (2070) eines zweiten Flanschs (207), der für dieses ringförmige Element (210) vorgesehen ist, und an diesen ebenen Oberflächen (2060, 2070), die senkrecht zur ersten Richtung (X) sind, geführt wird, wobei die ersten Flansche (206) entlang der ersten Richtung (X) voneinander beabstandet sind, im Abstand des radialen Halters (203) sind und an der rotierende Nabe (201) befestigt sind, wobei die zweiten Flansche (207) entlang der ersten Richtung (X) voneinander beabstandet sind, im Abstand vom radialen Halter (203) sind und an der rotierende Nabe (201) befestigt sind.

9. Rollvorrichtung (200) nach Anspruch 8, **dadurch gekennzeichnet, dass** eine zweite Kugel (208) in jeder zweiten Aussparung (212) jedes ringförmigen Elements (210) rotatorisch gehalten wird, wobei jeder Stab (202) ein zweites Durchgangsloch (209) der zweiten Kugel (208) durchquert und imstande ist, translatorisch in der zweiten Kugel (208) in der zweiten Längsrichtung (L) zu gleiten, wenn die Stäbe (202) geneigt sind.

10. Rollvorrichtung (200) nach einem beliebigen der Ansprüche 1, 2, 8 und 9, **dadurch gekennzeichnet, dass** die periphere Rolloberfläche (211) von einem Reifen gebildet ist.

11. Rollvorrichtung (100) nach einem beliebigen der Ansprüche 1 bis 7, **dadurch gekennzeichnet, dass** die periphere Rolloberfläche (111) von der äußeren peripheren Oberfläche jedes ringförmigen Elements (110) gebildet ist.

12. Rollvorrichtung (100, 200) nach einem beliebigen der vorangehenden Ansprüche, **dadurch gekennzeichnet, dass** sie Übergangs-Kugelgelenke (104, 204) aufweist, wobei jedes Übergangs-Kugelgelenk (104, 204) in jeder ersten Aussparung (105, 205) des radialen Halters (103, 203) untergebracht ist und jeden Stab (102, 202) rotatorisch mit dem radialen Halter (103, 203) verbindet.

13. Rollvorrichtung (100, 200) nach Anspruch 12, **dadurch gekennzeichnet, dass** jedes Übergangs-Kugelgelenk (104, 204) eine erste Kugel (1040, 2040) aufweist, die in jeder ersten Aussparung (105, 205) des radialen Halters (103, 203) rotatorisch gehalten wird, wobei jeder Stab (102, 202) ein erstes Durchgangsloch (1041, 2041) der ersten Kugel (1040, 2040) durchquert und imstande ist, translatorisch in der ersten Kugel (1040, 2040) in der zweiten Längsrichtung (L) zu gleiten, wenn die Stäbe (102, 202) geneigt sind.

14. Rollvorrichtung (100, 200) nach Anspruch 9 oder 13, **dadurch gekennzeichnet, dass** in jeder ersten Aussparung (105, 205) des radialen Halters (103, 203) ein Ring (1042, 2042) befestigt ist, der eine innere Gleitoberfläche in Kugelabschnittsform aufweist, in der die erste Kugel (1040, 2040) rotatorisch gehalten wird und/oder in jeder zweiten Aussparung (212) jedes ringförmigen Elements (110) ein Ring (2082) befestigt ist, der eine innere Gleitoberfläche in Kugelabschnittsform aufweist, in der die zweite Kugel (208) rotatorisch gehalten wird.

15. Rollvorrichtung (100, 200) nach einem beliebigen der Ansprüche 1 bis 14, **dadurch gekennzeichnet, dass** die Stäbe (102, 202) starr sind.

16. Rollvorrichtung (100, 200) nach einem beliebigen der Ansprüche 1 bis 14, **dadurch gekennzeichnet, dass** die Stäbe (102, 202) flexibel sind.

17. Rollendes Fahrzeug (300), aufweisend ein Fahrgestell (109) und untere Trageräder (301) des Fahrgestells (109), wobei die Räder im Verhältnis zum Fahrgestell (109) rotatorisch angebracht sind, **dadurch gekennzeichnet, dass** mindestens ein bestimmtes der Räder (301) von mindestens einer Rollvorrichtung (100, 200) nach einem beliebigen der vorangehenden Ansprüche gebildet ist, wobei das bestimmte Rad (301) rotatorisch um die erste Rotationsrichtung (X) angebracht ist und imstande ist, auf der Rolloberfläche (111, 211) zu rollen.

## Claims

1. Rolling device (100, 200), comprising :
a rotating hub (101, 201), rotatable about a first direction (X) of rotation,
annular elements (110, 210), arranged around the rotating hub (101, 201) and each bearing a peripheral rolling surface (111, 211),
rods (102, 202) extending in a second longitudinal direction (L),
a radial support (103, 203), integral with the hub (101, 201) and arranged around the hub (101, 201),
the rods (102, 202) passing through first recesses (105, 205) in the radial support (103, 203) and being inclinable relative to the radial support (103, 203),
**characterized in that**
each annular element (110, 210) has second recesses (112, 212), through which the rods (102, 202) are able to slide in translation along the second longitudinal direction (L) when the rods (102, 202) are inclined,
the annular elements (110, 210) each having translational guides in planes (113, 213) perpendicular to the first direction (X).

2. Rolling device (100, 200) according to claim 1, **characterized in that** the annular elements (110, 210) have translational guides in planes (113, 213) perpendicular to the first direction (X) by plane-to-plane contact against one another and/or relative to flanges (106, 107, 206, 207) fixed to the hub (101, 201) and/or relative to the radial support (103, 203).

3. Rolling device (100) according to claim 1 or 2, **characterized in that** the annular elements (110) are delimited by flat lateral surfaces (114), which are located in the planes (113) perpendicular to the first direction (X) and which are guided at least for some of these flat lateral surfaces (114) against each other in translation in said planes (113),
at least a first (110', 110") of the annular elements (110) being guided in translation in a plane (113) perpendicular to the first direction (X) against a flat surface (1060, 1070) of an end flange (106, 107), located in a plane (113) perpendicular to the first direction (X),
at least a second (110‴, 110ʺʺ) of the annular elements (110) being guided in translation in a plane (113) perpendicular to the first direction (X) against a flat surface (1030) of the radial support (103), located in a plane (113) perpendicular to the first direction (X).

4. Rolling device (100) according to claim 3, **characterized in that** the annular elements (110) are made of a ferromagnetic material, the rolling device (100) further comprises a mechanical shaft (108), which extends in the first direction (X) of rotation and about which the hub (101) is rotatably mounted, the mechanical shaft (108) comprising a generator (115), capable of generating a magnetic field through the peripheral rolling surface (111) of the annular elements (110) to form a magnetic wheel (100) by the annular elements (110).

5. Rolling device (100) according to claim 4, **characterized in that** the generator (115) comprises a first permanent magnet (116) having a first north pole (1161) and a first south pole (1162), and a second permanent magnet (117) located above the first permanent magnet (116) and having a second north pole (1171) and a second south pole (1172), the first and second permanent magnets (116, 117) being movable relative to one another about a vertical axis of rotation (118) so as to be able to assume at least a first position (P1) of increased magnetic attraction of the peripheral rolling surfaces (111), in which the second north pole (1171) is above the first north pole (1161), the second south pole (1172) is above the first south pole (1162) and the north poles (1161, 1171) or the south poles (1162, 1172) are oriented towards the first direction (X) of rotation, and a second position (P2) of suppression of magnetic attraction of the peripheral rolling surfaces (111), in which the second north pole (1171) is above the first south pole (1162) and the second south pole (1172) is above the first north pole (1161), the generator (115) comprising a control device for causing the first and second permanent magnets (116, 117) to rotate relative to one another about the vertical axis (118) of rotation into the first position (P1) or into the second position (P2).

6. Rolling device (100) according to claim 5, **characterized in that** the control device is adapted to cause the first and second permanent magnets (116, 117) to rotate relative to one another about the vertical axis (118) of rotation into the first position (P1) or into the second position (P2) or into at least one third position intermediate between the first position (P1) and the second position (P2).

7. Rolling device (100) according to any one of claims 4 to 6, **characterized in that** at least one of the flat lateral surfaces (114) of at least one of the annular elements (110) has, close to the peripheral rolling surface (111) of this annular element (110), at least one groove (119) along the peripheral rolling surface (111).

8. Rolling device (200) according to claim 1 or 2, **characterized in that** each annular element (210) is guided in translation in a plane (213) perpendicular to the first direction (X) between a flat surface (2060) of a first flange (206) provided for this annular element (210) and a flat surface (2070) of a second flange (207) provided for this annular element (210) and against these flat surfaces (2060, 2070), which are perpendicular to the first direction (X), the first flanges (206) being spaced apart along the first direction (X), being at a distance from the radial support (203) and being fixed to the rotating hub (201), the second flanges (207) being spaced apart along the first direction (X), being at a distance from the radial support (203) and being fixed to the rotating hub (201).

9. Rolling device (200) according to claim 8, **characterized in that** a second ball (208) is rotatably retained in each second recess (212) of each annular element (210), each rod (202) passing through a second through hole (209) of the second ball (208) and being able to slide in translation in the second ball (208) along the second longitudinal direction (L) when the rods (202) are inclined.

10. Rolling device (200) according to any one of claims 1, 2, 8 and 9, **characterized in that** the peripheral rolling surface (211) is formed by a tire.

11. Rolling device (100) according to any one of claims 1 to 7, **characterized in that** the peripheral rolling surface (111) is formed by the outer peripheral surface of each annular element (110).

12. Rolling device (100, 200) according to any one of the preceding claims, **characterized in that** it comprises intermediate ball joints (104, 204), each intermediate ball joint (104, 204) being housed in each first recess (105, 205) of the radial support (103, 203) and connecting each rod (102, 202) in a rotatable manner to the radial support (103, 203).

13. Rolling device (100, 200) according to claim 12, **characterized in that** each intermediate ball joint (104, 204) comprises a first ball (1040, 2040) rotatably retained in each first recess (105, 205) of the radial support (103, 203), each pin (102, 202) passes through a first through hole (1041, 2041) in the first ball (1040, 2040) and is able to slide in translation in the first ball (1040, 2040) in the second longitudinal direction (L) when the rods (102, 202) are inclined.

14. Rolling device (100, 200) according to claim 9 or 13, **characterized in that** in each first recess (105, 205) of the radial support (103, 203) is fixed a ring (1042, 2042) having an inner sliding surface in the form of a portion of a sphere, in which the first ball (1040, 2040) is rotatably retained and/or in each second recess (212) of each annular element (110) is secured a ring (2082) having a inner sliding surface in the form of a portion of a sphere, in which the second ball (208) is rotatably retained.

15. Rolling device (100, 200) according to any one of claims 1 to 14, **characterized in that** the rods (102, 202) are rigid.

16. Rolling device (100, 200) according to any one of claims 1 to 14, **characterized in that** the rods (102, 202) are flexible.

17. Rolling vehicle (300), comprising a chassis (109) and lower wheels (301) for supporting the chassis (109), the wheels being mounted so as to rotate with respect to the chassis (109), **characterized in that** at least one specific of the wheels (301) is formed by at least one rolling device (100, 200) according to any one of the preceding claims, the specific wheel (301) being mounted so as to rotate about the first direction (X) of rotation and being able to roll on the rolling surface (111, 211).
